# EUROPEAN PATENT APPLICATION

(11) **EP 4 194 257 A1**
(43) Date of publication of application: **14.06.2023**
(21) Application number: 22211990.1
(22) Date of filing: 07.12.2022
(51) Int. Cl.: B60L 53/63, B60L 53/67, B60L 53/80

(54) **POWER CONTROL METHOD AND SYSTEM FOR BATTERY CHARGING AND SWAP STATION, MEDIUM, APPARATUS, AND BATTERY CHARGING AND SWAP STATION**

(30) Priority: 08.12.2021 CN 202111493653
(71) Applicant: Nio Technology (Anhui) Co., Ltd, Hefei City, Anhui 230601 (CN)
(72) Inventor: ZHAO, Jincheng, Jiading Shanghai (CN)
(74) Representative: Vossius & Partner Patentanwälte Rechtsanwälte mbB

(57) **Abstract**

The disclosure relates to the technical field of battery charging and swapping, and in particular, to a power control method and system for a battery charging and swap station, a medium, an apparatus, and the battery charging and swap station. The disclosure is intended to solve the problem of how to implement integrated power management of the battery charging and swap station in the case of a plurality of bus bars. For this purpose, the battery charging and swap station in the disclosure includes a plurality of charging devices, the plurality of charging devices are divided into a plurality of device groups, and each device group is powered by one bus bar. The power control method includes: when a total power limit is less than a sum of bus bar power limits of all of the bus bars, obtaining the total power limit of the battery charging and swap station and a requested power of each device group; calculating a total requested power for the battery charging and swap station based on all of the requested powers; comparing the total requested power with the total power limit; and performing, based on a comparison result, power allocation on each device group. The disclosure can implement flexible and efficient power allocation under the power supply of the plurality of bus bars, and ensure a service capability of the battery charging and swap station.

## Description

### Technical Field

The disclosure relates to the technical field of battery charging and swapping, and in particular, to a power control method and system for a battery charging and swap station, a medium, an apparatus, and the battery charging and swap station.

### Background Art

Currently, the electric vehicle industry is developing rapidly, and consumers have an increasing tendency for choosing electric vehicles as a means of transportation. With the continuous increase in the vehicle population of electric vehicles, requirements for power replenishment of the electric vehicles are increasing accordingly, and various power replenishment devices are continuously emerging. A battery charging and swap station is an important facility capable of implementing rapid power replenishment at present.

The battery charging and swap station is usually equipped with a plurality of charging devices, such as a battery compartment, a direct-current charging pile, or the like. The battery compartment is generally used in conjunction with a battery swap platform, the battery compartment charges a traction battery, and the battery swap platform replaces the traction battery for an electric vehicle. The direct-current charging pile generally has a relatively large power, which can implement fast charging of the electric vehicle. However, more charging device investment means that a larger battery capacity is required, the battery capacity cannot be provided indefinitely, especially in some application scenarios in which a power supply capacity of a single bus bar is limited, and the bus bar is difficult to install, which cannot meet a battery capacity need of the battery charging and swap station. A current main solution to this problem is to separately introduce electricity through a plurality of bus bars, but an electric power on each bus bar is strictly limited. In this case, an efficient and reliable power allocation method is required to perform integrated power management on the battery charging and swap station.

Accordingly, there is a need in the art for a novel power control method for the battery charging and swap station to solve the above problems.

### Summary of the Disclosure

To solve at least one of the above problems in the prior art, that is, to solve the problem of how to implement integrated power management of a battery charging and swap station in the case of a plurality of bus bars, the disclosure provides a power control method for the battery charging and swap station. The battery charging and swap station includes a plurality of charging devices, all of the charging devices are divided into a plurality of device groups, and each device group is powered by one bus bar alone,
where the charging device includes at least one of a charging pile and a battery compartment, the battery compartment is configured to charge a traction battery, and the charging pile is configured to charge a new energy vehicle, and
the power control method includes:
   obtaining a total power limit of the battery charging and swap station and a requested power of each device group;
   calculating a total requested power for the battery charging and swap station based on all of the requested powers;
   comparing the total requested power with the total power limit; and
   performing, based on a comparison result, power allocation on each device group,
   where the total power limit is less than a sum of bus bar power limits of all of the bus bars.

In a preferred technical solution of the above power control method for the battery charging and swap station, the step of "performing, based on a comparison result, power allocation on each device group" further includes:
if the total requested power is greater than the total power limit, determining, based on the total power limit and a first preset allocation strategy, a pre-allocated power allocated to each device group from the total power limit;
determining, based on the pre-allocated power for each device group, an actual allocated power for each device group; and
performing, based on the actual allocated power for each device group, power allocation on each device group,
where the first preset allocation strategy is an equal allocation, an allocation according to a proportion of the bus bar power limit corresponding to each device group, or an allocation according to a proportion of the requested power of each device group.

In a preferred technical solution of the above power control method for the battery charging and swap station, the step of "determining, based on the pre-allocated power for each device group, an actual allocated power for each device group" further includes:
for each device group, taking a minimum value among the pre-allocated power, the requested power, and the bus bar power limit that are corresponding to the device group as an allocated power for the device group;
determining whether conditions that a difference between the total power limit and a sum of all allocated powers is greater than zero and there are a number of device groups with an allocated power equal to a pre-allocated power are met;
if the conditions are met, allocating the difference to the number of device groups according to a second preset allocation strategy;
updating pre-allocated powers for the number of device groups based on allocation results, and returning to re-determining the allocated power for each device group; and
if the conditions are not met, determining the actual allocated power for each device group as a current pre-allocated power,
where the second preset allocation strategy is an equal allocation, an allocation according to a proportion of the bus bar power limit corresponding to the number of device groups, or an allocation according to a proportion of the requested power of the number of device groups.

In a preferred technical solution of the above power control method for the battery charging and swap station, the step of "performing, based on a comparison result, power allocation on each device group" further includes:
if the total requested power is less than or equal to the total power limit, determining an actual allocated power for each device group as a smaller value between the requested power corresponding to the device group and the bus bar power limit.

In a preferred technical solution of the above power control method for the battery charging and swap station, the power control method further includes:
obtaining the requested power of each device group; and
determining an actual allocated power for each device group as a smaller value between the requested power corresponding to the device group and the bus bar power limit,
where the total power limit is equal to the sum of bus bar power limits of all of the bus bars.

In a preferred technical solution of the above power control method for the battery charging and swap station, when some device groups include a plurality of battery compartments, a compartment-side total requested power of each device group of the some device groups is determined in the following manner:
obtaining a number N of required batteries;
selecting N traction batteries with a highest state of charge from all of the battery compartments; and
respectively calculating charging requested powers of all batteries belonging to each device group in the N traction batteries, as the compartment-side total requested power of each device group,
where the number of required batteries is determined based on a reserved battery swap order or an estimated battery swap order of the battery swap station.

In a preferred technical solution of the above power control method for the battery charging and swap station, when at least two device groups of the plurality of device groups include a plurality of battery compartments, the power control method further includes:
for the at least two device groups, calculating a difference between the requested powers of any two of the device groups;
determining whether the difference is within a preset difference range; and
if the difference is not within the preset difference range, replacing a traction battery with a lowest state of charge in selected traction batteries belonging to a device group with a higher requested power with a traction battery with a highest state of charge in unselected traction batteries belonging to a device group with a lower requested power.

In a preferred technical solution of the above power control method for the battery charging and swap station, for each device group, the power control method further includes:
obtaining a real-time power of the device group;
comparing the real-time power with a bus bar power limit corresponding to the device group; and
if the real-time power is greater than the bus bar power limit, controlling the power of the device group to be reduced to the bus bar power limit.

In a preferred technical solution of the above power control method for the battery charging and swap station, the step of "controlling the power of the device group to be reduced to the bus bar power limit" further includes:
calculating a difference between the real-time power and the bus bar power limit;
selecting a charging device with an operating power greater than the difference from the device group; and
controlling the operating power of the selected charging device to reduce the difference; or
calculating a difference between the real-time power and the bus bar power limit; and
equally allocating the difference to all charging devices in the device group.

In a preferred technical solution of the above power control method for the battery charging and swap station, the power control method further includes:
on the premise that the charging device includes a charging pile, obtaining a communication status of the charging pile; and if there is a charging pile in a disconnected state, allocating a preset power to the charging pile; and/or
on the premise that the charging device includes a plurality of battery compartments, obtaining communication statuses of the battery compartments; and if there is a battery compartment in a disconnected state, deactivating the battery compartment and selecting a battery compartment corresponding to a battery with a highest state of charge from the remaining battery compartments to perform power allocation.
The disclosure further provides a power control system for a battery charging and swap station, the battery charging and swap station includes a plurality of charging devices, all of the charging devices are divided into a plurality of device groups, and each device group is powered by one bus bar alone,
where the charging device includes at least one of a charging pile and a battery compartment, the battery compartment is configured to charge a traction battery, and the charging pile is configured to charge a new energy vehicle, and
the power control system includes:
   an obtaining module configured to obtain a total power limit of the battery charging and swap station and a requested power of each device group;
   a calculation module configured to calculate a total requested power for the battery charging and swap station based on all of the requested powers;
   a comparison module configured to compare the total requested power with the total power limit; and
   a power allocation module configured to perform, based on a comparison result, power allocation on each device group,
   where the total power limit is less than a sum of bus bar power limits of all of the bus bars.

In a preferred technical solution of the above power control system for the battery charging and swap station, the power allocation module is further configured to perform, based on the comparison result, power allocation on each device group in the following manner:
if the total requested power is greater than the total power limit, determining, based on the total power limit and a first preset allocation strategy, a pre-allocated power allocated to each device group from the total power limit;
determining, based on the pre-allocated power for each device group, an actual allocated power for each device group; and
performing, based on the actual allocated power for each device group, power allocation on each device group,
where the first preset allocation strategy is an equal allocation, an allocation according to a proportion of the bus bar power limit corresponding to each device group, or an allocation according to a proportion of the requested power of each device group.

In a preferred technical solution of the above power control system for the battery charging and swap station, the power allocation module is further configured to determine, based on the pre-allocated power for each device group, the actual allocated power for each device group in the following manner:
for each device group, taking a minimum value among the pre-allocated power, the requested power, and the bus bar power limit that are corresponding to the device group as an allocated power for the device group;
determining whether conditions that a difference between the total power limit and a sum of all allocated powers is greater than zero and there are a number of device groups with an allocated power equal to a pre-allocated power are met;
if the conditions are met, allocating the difference to the number of device groups according to a second preset allocation strategy;
updating pre-allocated powers for the number of device groups based on allocation results, and returning to re-determining the allocated power for each device group; and
if the conditions are not met, determining the actual allocated power for each device group as a current pre-allocated power,
where the second preset allocation strategy is an equal allocation, an allocation according to a proportion of the bus bar power limit corresponding to the number of device groups, or an allocation according to a proportion of the requested power of the number of device groups.

In a preferred technical solution of the above power control system for the battery charging and swap station, the power allocation module is further configured to perform, based on the comparison result, power allocation on each device group in the following manner:
if the total requested power is less than or equal to the total power limit, determining an actual allocated power for each device group as a smaller value between the requested power corresponding to the device group and the bus bar power limit.

In a preferred technical solution of the above power control system for the battery charging and swap station, the obtaining module is further configured to obtain the requested power of each device group; and
the power allocation module is further configured to determine an actual allocated power for each device group as a smaller value between the requested power corresponding to the device group and the bus bar power limit,
where the total power limit is equal to the sum of bus bar power limits of all of the bus bars.

In a preferred technical solution of the above power control system for the battery charging and swap station, when some device groups include a plurality of battery compartments, the power control system further includes:
a station-side requested power determination module configured to determine a compartment-side total requested power of each device group of the device groups in the following manner:
obtaining a number N of required batteries;
selecting N traction batteries with a highest state of charge from all of the battery compartments; and
respectively calculating charging requested powers of all batteries belonging to each device group in the N traction batteries, as the compartment-side total requested power of each device group,
where the number of required batteries is determined based on a reserved battery swap order or an estimated battery swap order of the battery swap station.

In a preferred technical solution of the above power control system for the battery charging and swap station, when at least two device groups of the plurality of device groups include a plurality of battery compartments, for the at least two device groups, the calculation module is further configured to calculate a difference between the requested powers of any two of the device groups;
the comparison module is further configured to determine whether the difference is within a preset difference range; and
the power allocation module is further configured to, when the difference is not within the preset difference range, replace a traction battery with a lowest state of charge in selected traction batteries belonging to a device group with a higher requested power with a traction battery with a highest state of charge in unselected traction batteries belonging to a device group with a lower requested power.

In a preferred technical solution of the above power control system for the battery charging and swap station, for each device group, the obtaining module is further configured to obtain a real-time power of the device group;
the comparison module is further configured to compare the real-time power with a bus bar power limit corresponding to the device group; and
the power allocation module is further configured to, when the real-time power is greater than the bus bar power limit, control the power of the device group to be reduced to the bus bar power limit.

In a preferred technical solution of the above power control system for the battery charging and swap station, the power allocation module is further configured to control the power of the device group to be reduced to the bus bar power limit in the following manner:
calculating a difference between the real-time power and the bus bar power limit;
selecting a charging device with an operating power greater than the difference from the device group; and
controlling the operating power of the selected charging device to reduce the difference; or
calculating a difference between the real-time power and the bus bar power limit; and
equally allocating the difference to all charging devices in the device group.

In a preferred technical solution of the above power control system for the battery charging and swap station, on the premise that the charging device includes a charging pile, the obtaining module is further configured to obtain a communication status of the charging pile; and the power allocation module is further configured to allocate, if there is a charging pile in a disconnected state, a preset power to the charging pile; and/or
on the premise that the charging device includes a plurality of battery compartments, the obtaining module is further configured to obtain communication statuses of the battery compartments; and the power allocation module is further configured to, if there is a battery compartment in a disconnected state, deactivate the battery compartment and select a battery compartment corresponding to a battery with a highest state of charge from the remaining battery compartments to perform power allocation.

The disclosure further provides a computer-readable storage medium storing a plurality of program codes, where the program codes are adapted to be loaded and executed by a processor to implement the power control method for the battery charging and swap station according to any one of the above preferred technical solutions.

The disclosure further provides a control apparatus, including:
a processor; and
a memory, where the memory is adapted to store a plurality of program codes, and the program codes are adapted to be loaded and executed by the processor to implement the power control method for the battery charging and swap station according to any one of the above preferred technical solutions.

The disclosure further provides a battery charging and swap station, the battery charging and swap station includes a plurality of charging devices, all of the charging devices are divided into a plurality of device groups, each device group is powered by one bus bar alone, and the battery charging and swap station further includes the control apparatus according to the above preferred technical solution.

In the preferred technical solutions of the disclosure, when the total power limit is less than the sum of the bus bar power limits of all of the bus bars, by performing power allocation on each device group based on the comparison result between the total requested power and the total power limit, the disclosure implements integrated power management of the battery charging and swap station, implements flexible and efficient power allocation under a limited power, and ensures a service capability.

Further, when the total requested power is greater than the total power limit, by first allocating the total power limit to each device group based on the first preset allocation strategy, then determining the actual allocated power for each device group based on the pre-allocated power, and then performing power allocation on each device group, the disclosure can implement maximum power allocation for each device group without exceeding the total power limit.

Further, by first determining the allocated power based on the pre-allocated power, requested power, and bus bar power limit of each device group, and then when there is a remainder in the total power limit, allocating the remaining power to each device group as much as possible according to the second preset allocation strategy, the power allocation method in the disclosure can use the limited battery capacity more flexibly and efficiently.

Further, when the total power limit is equal to the sum of all bus bar power limits, by directly determining the actual allocated power for each device group as a smaller value between the requested power corresponding to the device group and the bus bar power limit, the power allocation method in the disclosure can ensure the maximum power allocation for each device group without exceeding the power limit.

Further, by determining the number N of required batteries based on the reserved battery swap order or the estimated battery swap order of the battery swap station, thereby determining the compartment-side total requested power, the disclosure can also allocate powers as many as possible to the charging device that needs to be operated, on the premise that a battery swap service capability is not affected, and effectively improve the utilization rate of the battery capacity of the station.

Further, by comparing the requested powers of any two device groups including a plurality of battery compartments, and adjusting the requested powers of the two device groups when the difference between the two is not within the preset difference range, the disclosure can allocate powers as many as possible to be used by the two device groups, use the limited battery capacity more efficiently, and improve the utilization rate of the capacity of the station.

Further, during power allocation, by performing real time monitoring on the real-time power of each device group, and controlling the power allocation of devices in the device group based on the real-time power and a corresponding power limit of each bus bar, the disclosure can further perform power allocation strictly under the power limit of each bus bar, so as to avoid operation exceeding the power limit from the source.

Further, by allocating the preset power to the charging pile when the communication of the charging pile is disconnected, deactivating the battery compartment and selecting a battery compartment corresponding to a battery with a highest state of charge from the remaining battery compartments to perform power allocation when the communication of the battery compartment is disconnected, the disclosure also avoids the occurrence of tripping and device damage caused by the over-limited power of the bus bars when the charging piles, battery compartments, and other devices are anomalous, and reduces the operation and maintenance costs of the whole station.

Solution 1. A power control method for a battery charging and swap station, where the battery charging and swap station includes a plurality of charging devices, all of the charging devices are divided into a plurality of device groups, and each device group is powered by one bus bar alone,
where the charging device includes at least one of a charging pile and a battery compartment, the battery compartment is configured to charge a traction battery, and the charging pile is configured to charge a new energy vehicle, and
the power control method includes:
   obtaining a total power limit of the battery charging and swap station and a requested power of each device group;
   calculating a total requested power for the battery charging and swap station based on all of the requested powers;
   comparing the total requested power with the total power limit; and
   performing, based on a comparison result, power allocation on each device group,
   where the total power limit is less than a sum of bus bar power limits of all of the bus bars.

Solution 2. The power control method for the battery charging and swap station according to solution 1, where the step of "performing, based on a comparison result, power allocation on each device group" further includes:
if the total requested power is greater than the total power limit, determining, based on the total power limit and a first preset allocation strategy, a pre-allocated power allocated to each device group from the total power limit;
determining, based on the pre-allocated power for each device group, an actual allocated power for each device group; and
performing, based on the actual allocated power for each device group, power allocation on each device group,
where the first preset allocation strategy is an equal allocation, an allocation according to a proportion of the bus bar power limit corresponding to each device group, or an allocation according to a proportion of the requested power of each device group.

Solution 3. The power control method for the battery charging and swap station according to solution 2, where the step of "determining, based on the pre-allocated power for each device group, an actual allocated power for each device group" further includes:
for each device group, taking a minimum value among the pre-allocated power, the requested power, and the bus bar power limit that are corresponding to the device group as an allocated power for the device group;
determining whether conditions that a difference between the total power limit and a sum of all allocated powers is greater than zero and there are a number of device groups with an allocated power equal to a pre-allocated power are met;
if the conditions are met, allocating the difference to the number of device groups according to a second preset allocation strategy;
updating pre-allocated powers for the number of device groups based on allocation results, and returning to re-determining the allocated power for each device group; and
if the conditions are not met, determining the actual allocated power for each device group as a current pre-allocated power,
where the second preset allocation strategy is an equal allocation, an allocation according to a proportion of the bus bar power limit corresponding to the number of device groups, or an allocation according to a proportion of the requested power of the number of device groups.

Solution 4. The power control method for the battery charging and swap station according to solution 1, where the step of "performing, based on a comparison result, power allocation on each device group" further includes:
if the total requested power is less than or equal to the total power limit, determining an actual allocated power for each device group as a smaller value between the requested power corresponding to the device group and the bus bar power limit.

Solution 5. The power control method for the battery charging and swap station according to solution 1, where the power control method further includes:
obtaining the requested power of each device group; and
determining an actual allocated power for each device group as a smaller value between the requested power corresponding to the device group and the bus bar power limit,
where the total power limit is equal to the sum of bus bar power limits of all of the bus bars.

Solution 6. The power control method for the battery charging and swap station according to solution 1, where when some device groups include a plurality of battery compartments, a compartment-side total requested power of each device group of the some device groups is determined in the following manner:
obtaining a number N of required batteries;
selecting N traction batteries with a highest state of charge from all of the battery compartments; and
respectively calculating charging requested powers of all batteries belonging to each device group in the N traction batteries, as the compartment-side total requested power of each device group,
where the number of required batteries is determined based on a reserved battery swap order or an estimated battery swap order of the battery swap station.

Solution 7. The power control method for the battery charging and swap station according to solution 6, where when at least two device groups of the plurality of device groups include a plurality of battery compartments, the power control method further includes:
for the at least two device groups, calculating a difference between the requested powers of any two of the device groups;
determining whether the difference is within a preset difference range; and
if the difference is not within the preset difference range, replacing a traction battery with a lowest state of charge in selected traction batteries belonging to a device group with a higher requested power with a traction battery with a highest state of charge in unselected traction batteries belonging to a device group with a lower requested power.

Solution 8. The power control method for the battery charging and swap station according to solution 1, where for each device group, the power control method further includes:
obtaining a real-time power of the device group;
comparing the real-time power with a bus bar power limit corresponding to the device group; and
if the real-time power is greater than the bus bar power limit, controlling the power of the device group to be reduced to the bus bar power limit.

Solution 9. The power control method for the battery charging and swap station according to solution 8, where the step of "controlling the power of the device group to be reduced to the bus bar power limit" further includes:
calculating a difference between the real-time power and the bus bar power limit;
selecting a charging device with an operating power greater than the difference from the device group; and
controlling the operating power of the selected charging device to reduce the difference; or
calculating a difference between the real-time power and the bus bar power limit; and
equally allocating the difference to all charging devices in the device group.

Solution 10. The power control method for the battery charging and swap station according to solution 1, where the power control method further includes:
on the premise that the charging device includes a charging pile, obtaining a communication status of the charging pile; and if there is a charging pile in a disconnected state, allocating a preset power to the charging pile; and/or
on the premise that the charging device includes a plurality of battery compartments, obtaining communication statuses of the battery compartments; and if there is a battery compartment in a disconnected state, deactivating the battery compartment and selecting a battery compartment corresponding to a battery with a highest state of charge from the remaining battery compartments to perform power allocation.

Solution 11. A power control system for a battery charging and swap station, where the battery charging and swap station includes a plurality of charging devices, all of the charging devices are divided into a plurality of device groups, and each device group is powered by one bus bar alone,
where the charging device includes at least one of a charging pile and a battery compartment, the battery compartment is configured to charge a traction battery, and the charging pile is configured to charge a new energy vehicle, and
the power control system includes:
   an obtaining module configured to obtain a total power limit of the battery charging and swap station and a requested power of each device group;
   a calculation module configured to calculate a total requested power for the battery charging and swap station based on all of the requested powers;
   a comparison module configured to compare the total requested power with the total power limit; and
   a power allocation module configured to perform, based on a comparison result, power allocation on each device group,
   where the total power limit is less than a sum of bus bar power limits of all of the bus bars.

Solution 12. The power control system for the battery charging and swap station according to solution 11, where the power allocation module is further configured to perform, based on the comparison result, power allocation on each device group in the following manner:
if the total requested power is greater than the total power limit, determining, based on the total power limit and a first preset allocation strategy, a pre-allocated power allocated to each device group from the total power limit;
determining, based on the pre-allocated power for each device group, an actual allocated power for each device group; and
performing, based on the actual allocated power for each device group, power allocation on each device group,
where the first preset allocation strategy is an equal allocation, an allocation according to a proportion of the bus bar power limit corresponding to each device group, or an allocation according to a proportion of the requested power of each device group.

Solution 13. The power control system for the battery charging and swap station according to solution 12, where the power allocation module is further configured to determine, based on the pre-allocated power for each device group, the actual allocated power for each device group in the following manner:
for each device group, taking a minimum value among the pre-allocated power, the requested power, and the bus bar power limit that are corresponding to the device group as an allocated power for the device group;
determining whether conditions that a difference between the total power limit and a sum of all allocated powers is greater than zero and there are a number of device groups with an allocated power equal to a pre-allocated power are met;
if the conditions are met, allocating the difference to the number of device groups according to a second preset allocation strategy;
updating pre-allocated powers for the number of device groups based on allocation results, and returning to re-determining the allocated power for each device group; and
if the conditions are not met, determining the actual allocated power for each device group as a current pre-allocated power,
where the second preset allocation strategy is an equal allocation, an allocation according to a proportion of the bus bar power limit corresponding to the number of device groups, or an allocation according to a proportion of the requested power of the number of device groups.

Solution 14. The power control system for the battery charging and swap station according to solution 11, where the power allocation module is further configured to perform, based on the comparison result, power allocation on each device group in the following manner:
if the total requested power is less than or equal to the total power limit, determining an actual allocated power for each device group as a smaller value between the requested power corresponding to the device group and the bus bar power limit.

Solution 15. The power control system for the battery charging and swap station according to solution 11, where
the obtaining module is further configured to obtain the requested power of each device group; and
the power allocation module is further configured to determine an actual allocated power for each device group as a smaller value between the requested power corresponding to the device group and the bus bar power limit,
where the total power limit is equal to the sum of bus bar power limits of all of the bus bars.

Solution 16. The power control system for the battery charging and swap station according to solution 11, where when some device groups include a plurality of battery compartments, the power control system further includes:
a station-side requested power determination module configured to determine a compartment-side total requested power of each device group of the some device groups in the following manner:
obtaining a number N of required batteries;
selecting N traction batteries with a highest state of charge from all of the battery compartments; and
respectively calculating charging requested powers of all batteries belonging to each device group in the N traction batteries, as the compartment-side total requested power of each device group,
where the number of required batteries is determined based on a reserved battery swap order or an estimated battery swap order of the battery swap station.

Solution 17. The power control system for the battery charging and swap station according to solution 16, where when at least two device groups of the plurality of device groups include a plurality of battery compartments, for the at least two device groups, the calculation module is further configured to calculate a difference between the requested powers of any two of the device groups;
the comparison module is further configured to determine whether the difference is within a preset difference range; and
the power allocation module is further configured to, when the difference is not within the preset difference range, replace a traction battery with a lowest state of charge in selected traction batteries belonging to a device group with a higher requested power with a traction battery with a highest state of charge in unselected traction batteries belonging to a device group with a lower requested power.

Solution 18. The power control system for the battery charging and swap station according to solution 11, where for each device group, the obtaining module is further configured to obtain a real-time power of the device group;
the comparison module is further configured to compare the real-time power with a bus bar power limit corresponding to the device group; and
the power allocation module is further configured to, when the real-time power is greater than the bus bar power limit, control the power of the device group to be reduced to the bus bar power limit.

Solution 19. The power control system for the battery charging and swap station according to solution 18, where the power allocation module is further configured to control the power of the device group to be reduced to the bus bar power limit in the following manner:
calculating a difference between the real-time power and the bus bar power limit;
selecting a charging device with an operating power greater than the difference from the device group; and
controlling the operating power of the selected charging device to reduce the difference; or
calculating a difference between the real-time power and the bus bar power limit; and
equally allocating the difference to all charging devices in the device group.

Solution 20. The power control system for the battery charging and swap station according to solution 11, where on the premise that the charging device includes a charging pile, the obtaining module is further configured to obtain a communication status of the charging pile; and the power allocation module is further configured to allocate, if there is a charging pile in a disconnected state, a preset power to the charging pile; and/or
on the premise that the charging device includes a plurality of battery compartments, the obtaining module is further configured to obtain communication statuses of the battery compartments; and the power allocation module is further configured to, if there is a battery compartment in a disconnected state, deactivate the battery compartment and select a battery compartment corresponding to a battery with a highest state of charge from the remaining battery compartments to perform power allocation.

Solution 21. A computer-readable storage medium, storing a plurality of program codes, where the program codes are adapted to be loaded and run by a processor to perform the power control method for the battery charging and swap station according to any one of solutions 1 to 10.

Solution 22. A control apparatus, including:
a processor; and
a memory, where the memory is adapted to store a plurality of program codes, and the program codes are adapted to be loaded and executed by the processor to implement the power control method for the battery charging and swap station according to any one of solutions 1 to 10.

Solution 23. A battery charging and swap station, where the battery charging and swap station includes a plurality of charging devices, all of the charging devices are divided into a plurality of device groups, each device group is powered by one bus bar alone, and the battery charging and swap station further includes the control apparatus according to solution 22.

### Brief Description of the Drawings

A power control method and system for a battery charging and swap station, a medium, and the battery charging and swap station in the disclosure will be described below with reference to the accompanying drawings and mainly taking two device groups as an example. In the accompanying drawings:
FIG. 1 is a system diagram of a battery charging and swap station according to the disclosure;
FIG. 2 is a flowchart of a first embodiment of a power control method for a battery charging and swap station when a total power limit is less than a sum of bus bar power limits of all bus bars according to the disclosure;
FIG. 3 is a flowchart of a first embodiment of a power control method for a battery charging and swap station when a total power limit is equal to a sum of bus bar power limits of all bus bars according to the disclosure;
FIG. 4 is a logic diagram of a possible embodiment of a power control method for a battery charging and swap station when a total power limit is less than a sum of bus bar power limits of all bus bars according to the disclosure;
FIG. 5 is a flowchart of a second embodiment of a power control method for a battery charging and swap station when a total power limit is less than a sum of bus bar power limits of all bus bars according to the disclosure;
FIG. 6 is a flowchart of a second embodiment of a power control method for a battery charging and swap station when a total power limit is equal to a sum of bus bar power limits of all bus bars according to the disclosure; and
FIG. 7 is a system diagram of a power control system for a battery charging and swap station according to the disclosure.

### List of reference numerals

1. Battery swap station; 11. First control unit; 12. Charging branch; 13. Data exchange apparatus; 2. Charging pile; 21. Second control unit; 31. First electricity meter; 32. Second electricity meter; 41. First bus bar; 42. Second bus bar;
100. Power control system; 110. Obtaining module; 120. Calculation module; 130. Comparison module; 140. Power allocation module; and 150. Station-side requested power determination module.

### Detailed Description of Embodiments

Preferred embodiments of the disclosure are described below with reference to the accompanying drawings. Those skilled in the art should understand that these embodiments are only used to explain the technical principles of the disclosure, and are not intended to limit the scope of protection of the disclosure. For example, although the embodiments are described in conjunction with a battery electric vehicle, it is not intended to limit the scope of protection of the disclosure. Without departing from the principles of the disclosure, those skilled in the art can apply the disclosure to other application scenarios. For example, the disclosure is also applicable to a new energy vehicle that needs to be charged, such as a hybrid vehicle.

It should be noted that, in the description of the disclosure, the terms "first", "second", and "third" are merely used for description, but cannot be understood as indicating or implying the relative importance.

It should also be noted that, in the description of the disclosure, the terms "mount", "engage" and "connect" should be interpreted in a broad sense unless explicitly defined and limited otherwise, which, for example, may mean a fixed connection, a detachable connection or an integral connection; or may mean a mechanical connection or an electrical connection; or may mean a direct connection, an indirect connection by means of an intermediary, or internal communication between two elements. For those skilled in the art, the specific meaning of the above-mentioned terms in the disclosure can be interpreted according to the specific situation.

### Embodiment 1

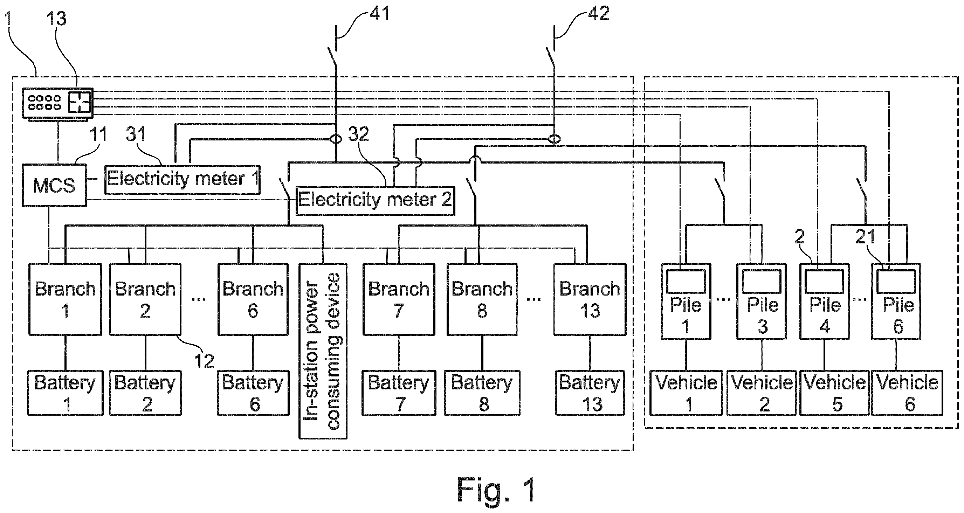

First, referring to FIG. 1, a brief description is made to a battery charging and swap station according to the disclosure. FIG. 1 is a system diagram of a battery charging and swap station according to the disclosure. In FIG. 1, a solid line represents a circuit, and a dash dotted line represents a communication line.

As shown in FIG. 1, the battery charging and swap station in the disclosure includes a battery swap station 1 and charging piles 2. The battery swap station 1 includes a first control unit 11, an in-station power consuming device, and a plurality of battery compartments (not shown in the figure). Each battery compartment includes one charging branch 12, and when a traction battery is located in the battery compartment, the charging branch 12 engages with the traction battery and charges the traction battery. The first control unit 11 is arranged in the battery swap station 1, and each battery compartment is communicatively connected to the first control unit 11, so that the first control unit 11 sends a power allocation instruction to the battery compartment to control a charging power of the battery compartment. Each charging pile 2 includes a charging gun and a second control unit 21. The charging gun is capable of being in plug-in connection with a charging socket provided on a new energy vehicle, the charging gun is electrically connected to the second control unit 21, and the second control unit 21 is communicatively connected to the first control unit 11, so that the second control unit 21 can receive the power allocation instruction sent by the first control unit 11, and control the charging gun to charge the new energy vehicle based on the power allocation instruction.

The first control unit 11 preferably adopts a master control system (MCS for short) of the battery swap station 1, which is provided in a control cabinet of the battery swap station 1 and is mainly used for coordinating actions of all devices in the battery swap station 1 according to a preset control logic, such as coordinating a charging power and charging start-stop time when a battery is charged in the battery compartment, coordinating actions of each battery swap mechanism when a traction battery is replaced for the electric vehicle to be swapped, interacting with a cloud server, controlling auxiliary devices such as a lighting apparatus and a cooling apparatus in the battery charging and swap station, and the like.

Generally, the performance of the master control system of the battery swap station 1 is much stronger than that of the second control unit 21 of the charging pile 2. By using the master control system of the battery swap station 1 as the first control unit 11, power allocation for the battery compartment and the charging pile 2 is completed, which can rapidly and stably respond to allocation strategies and ensure the stable operation of the battery charging and swap station.

It should be noted that, although a specific model of the master control system is not described in the disclosure, this does not mean that the master control system is not fully disclosed. Instead, the master control system is a control apparatus necessary for the battery swap station 1, and those skilled in the art know the specific type and configuration thereof, which will not be repeated in the disclosure again.

The in-station power consuming devices mainly refer to power consuming devices other than the battery compartment, including but not limited to devices in a battery swapping process (such as a battery swap trolley, a battery transfer device, a hoisting mechanism, a locking/unlocking mechanism, and a positioning mechanism), a lighting device, a communications device, and the like, and the powers of these devices are generally fixed during operation and need to be fixedly provided by the bus bar.

Each battery compartment includes one charging branch 12, and each charging branch 12 includes a charging control board, a charging AC/DC module, a direct current contactor, or the like. The charging control board is communicatively connected to the first control unit 11, and preferably, each charging control board is communicatively connected to the first control unit 11 through a CAN bus.

The charging pile 2 is a direct-current charging pile in the disclosure, and more specifically, is a super charging pile, which has the characteristics of a large charging power and a large charging current, and can provide fast, intelligent, and reliable charging services for the new energy vehicle. Each charging pile is provided with a second control unit 21, and the second control unit 21 is communicatively connected to the first control unit 11.

Due to a high power consumption of the battery charging and swap station, in some application fields, a power supply capacity of a single bus bar is limited and cannot meet installation conditions. In this case, a plurality of bus bars are used to introduce electricity, which can solve this problem and improve application scopes of the battery charging and swap station. In this embodiment, the electricity of the battery charging and swap station is introduced by two bus bars, that is, a first bus bar 41 and a second bus bar 42. In all of the battery compartments and charging piles 2, some are connected to the first bus bar 41, and some are connected to the second bus bar 42.

For example, in a possible embodiment, 13 battery compartments and six charging piles 2 are provided, which are taken as an example: the 13 battery compartments are divided into two groups, the first six battery compartments together with other in-station power consuming devices are a first group, which are connected to the first bus bar 41 through a same circuit breaker, and the last seven battery compartments are a second group, which are connected to the second bus bar 42 through another circuit breaker. The six charging piles 2 are also divided into two groups, the first three charging piles 2 as a group are connected to the first bus bar 41 through a circuit breaker, and the last three charging piles 2 as a group are connected to the second bus bar 42 through another circuit breaker. Thus, all of the battery compartments and the charging piles 2 are divided into two groups, which are referred to as a first device group and a second device group respectively in the following embodiments of the disclosure. As described above, the first device group includes the first six battery compartments, the in-station power consuming devices, and the first three charging piles 2; and the second device group includes the last seven battery compartments and the last three charging piles 2.

In practical applications, IP addresses of the devices in the first device group and those of the devices in the second device group may be set in two different ranges, so that the first control unit 11 may determine, based on the IP addresses, a group to which a connected device belongs.

Certainly, the specific numbers of the battery compartments and charging piles 2, the number of the bus bars, and the specific grouping are only used to illustrate the principles of the disclosure, and are not intended to limit the scope of protection of the disclosure. Those skilled in the art may adjust the number of the battery compartments, the number of the charging piles 2, the number of the bus bars, and the specific division of the first device group and the second device group, so that an adjusted technical solution is applicable to more specific application scenarios. For example, there may alternatively be three, four, or more bus bars, and correspondingly, three, four, or another number of device groups may be obtained through division. For another example, the battery charging and swap station may be provided with only battery compartments, so that each device group only includes some battery compartments; likewise, the battery charging and swap station may alternatively be provided with only charging piles 2, so that each device group only includes some charging piles 2. For another example, when both the battery compartments and the charging piles 2 are provided in the battery charging and swap station, the device group may include both the above two types of charging devices, or may include only one of the two types of charging devices.

Still referring to FIG. 1, the battery swap station 1 is further provided with a data exchange apparatus 13, and the first control unit 11 and the second control unit 21 are communicatively connected to the data exchange apparatus 13 simultaneously, thereby implementing communication connection between the first control unit 11 and the second control unit 21. Specifically, the data exchange apparatus 13 is a switch, and the first control unit 11 and/or the second control unit 21 are/is communicatively connected to the data exchange apparatus 13 in a wired manner. In the disclosure, the first control unit 11 and the second control unit 21 are communicatively connected to the switch through an RJ45 communication line. When the battery charging and swap station is operating, the first control unit 11 communicates with the second control unit 21 of the charging pile 2 through the switch, and a communication period may be set manually, such as setting to 2s-30s. In the disclosure, 5s is taken as an example, that is, the second control unit 21 of the charging pile 2 may send a charging requested power of the charging pile 2 to the switch every 5s, the switch transmits the charging requested power to the first control unit 11, and after the first control unit 11 determines a power allocation, a power allocation instruction is transmitted back to the second control unit 21 through the switch, so that the second control unit 21 controls a charging output power of the charging pile 2 based on the instruction.

The first control unit 11 and the second control unit 21 are communicatively connected to the switch in a wired manner, which ensures the stability of signal transmission. The switch is used to implement the communication connection between the first control unit 11 and the second control unit 21, which can improve the connection efficiency and guarantee the security of data transmission.

Still referring to FIG. 1, the battery charging and swap station further includes two measurement and control electricity meters, both of which are communicatively connected to the first control unit 11. A first electricity meter 31 is provided on the first bus bar 41 for measuring a real-time power of the first device group, and the second electricity meter 32 is provided on the second bus bar 42 for measuring a real-time power of the second device group. Therefore, the first control unit 11 may separately obtain the real-time powers of the first device group and the second device group, and arrange powers of the charging devices in each group based on the real-time powers, so as to implement the monitoring of a real-time load power of each bus bar, avoid the tripping and device damage caused by the station operating exceeding a power limit from the source of power supply, and reduce the operation and maintenance costs.

In a construction process of a battery charging and swap station, if there are many charging devices, an installation power is usually not very low, and there are few cases where a higher installation power may be met through a single bus bar, so it is required to introduce a plurality of bus bars to separately introduce electricity, to meet the needs of the battery charging and swap station. In this case, there usually are the following situations: first, the sum of the power limits of the plurality of bus bars provided by a power supplier is approximately equal to the installation power; second, due to insufficient power supply and other reasons, the sum of the power limits of the plurality of bus bars provided by the power supplier is less than the installation power; and third, due to cable model selection, distribution network, and other reasons, the sum of the power limits of the plurality of bus bars provided by the power supplier is greater than the installation power. For the first two cases, only by controlling an actual used power of each device group not to exceed a current power limit of its corresponding bus bar, the whole station may be operated without exceeding the power limit. For the last one case, it is not only required to control the actual used power of each device group not to exceed the power limit of its bus bar, but also to control the sum of the actual used powers of all device groups not to exceed the installation power of the whole station.

Therefore, when the battery charging and swap station is put into use, the first control unit 11 separately obtains a charging requested power of each rechargeable battery in the battery compartments and a charging requested power of each charging pile 2, and calculates the requested power of each device group. If the total power limit of the whole station is equal to the sum of the power limits of the plurality of bus bars (that is, the first two cases above), it is only required to determine a power to be allocated to each device group based on a power limit of each bus bar; or if the installation power of the whole station is less than the sum of the power limits of the plurality of bus bars (that is, the third case above), it is required to determine the power to be allocated to each device group based on the installation power of the whole station and the power limit of each bus bar. After the power allocation of each device group is determined, the power allocated to each battery compartment and/or charging pile 2 in the group is further determined based on the power allocated to each device group, and finally based on the allocation result, a control instruction is sent to the battery compartments and charging piles 2 in each device group, so that each battery compartment and each charging pile 2 may be operated based on respective allocated powers.

It should be noted that, although a specific configuration of the battery charging and swap station is described in the above embodiments, but this is not intended to limit the scope of protection of the disclosure. Those skilled in the art may adjust the specific form of the above battery charging and swap station without departing from the principles of the disclosure, so that the power control method described below in the disclosure may be applied to more application scenarios.

For example, although the above examples are described in conjunction with the data exchange apparatus 13 that is a switch, such a configuration is not unchanged, and those skilled in the art can adjust the configuration, as long as the adjusted technical solution can meet the communication connection between the first control unit 11 and the second control unit 21. For example, in other embodiments, a concentrator may alternatively be used to implement communication connection between the two, or the providing of a switch is omitted, so that the two are communicatively connected directly through a data line. In addition, the switch, and the first control unit 11 and the second control unit 21 may be connected in a wired manner, such as through a wired network (RJ45), an RS485/232, or a power line carrier (PLC), or may be connected in a wireless manner, such as through WIFI, Bluetooth, or ZIGBEE, or may be connected in a form of both the wired manner and the wireless manner.

For another example, in another alternative embodiment, although the above embodiment is described in conjunction with the first control unit 11 and the battery compartment being connected through the CAN bus, this communication connection manner is not unchanged, and those skilled in the art can adjust the communication connection manner based on specific application scenarios. For example, a 485 bus may alternatively be used to replace the above CAN bus.

For another example, in another alternative embodiment, the specific composition of the charging branch 12 of the battery compartment is described in the above embodiment in conjunction with the charging control board, the charging AC/DC module, and the direct current contactor that are included. However, this is not intended to limit the scope of protection of the disclosure, and those skilled in the art can replace the above charging branch 12 with any form of charging branch.

For another example, in another alternative embodiment, although a measurement and control electricity meter is provided on each bus bar in the above battery charging and swap station, the measurement and control electricity meter is not necessary in the disclosure, and those skilled in the art can decide its use or deletion based on specific application scenarios.

For another example, in another alternative embodiment, although the above first control unit 11 preferably adopts the master control system of the battery swap station 1, it is obvious that such a configuration is not unique. In other embodiments, those skilled in the art may provide a separate controller to complete the functions of the above first control unit 11.

For another example, in another alternative embodiment, although the above charging pile 2 is described as a super charging pile, the battery charging and swap station in the disclosure is not limited to this. In other embodiments, the super charging pile may alternatively be replaced with a common direct-current charging pile, or may be replaced with an alternating current charging pile.

Of course, the above alternative embodiments, or the alternative embodiments and the preferable embodiments may be cross-used cooperatively, so as to obtain new embodiments that are suitable for more specific application scenarios by combining the above embodiments.

### Embodiment 2

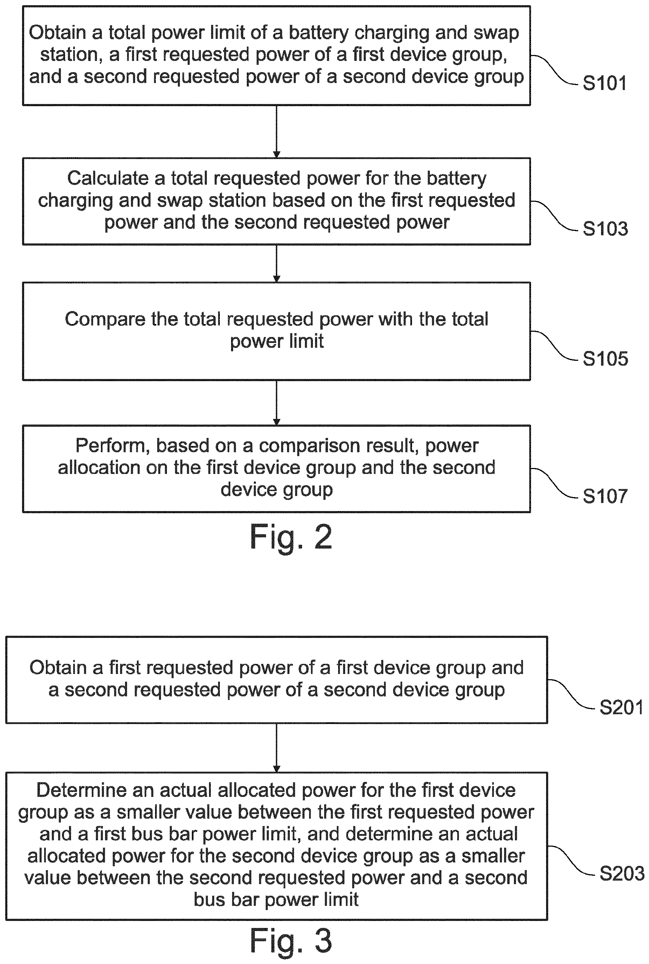

The following describes, with reference to FIG. 2 in conjunction with the above embodiment in which the two device groups are provided in the battery charging and swap station, a power control method for the battery charging and swap station in the disclosure when a total power limit is less than a sum of bus bar power limits of all bus bars. FIG. 2 is a flowchart of a first embodiment of a power control method for a battery charging and swap station when a total power limit is less than a sum of bus bar power limits of all bus bars according to the disclosure.

As shown in FIG. 2, to implement integrated power management of the battery charging and swap station in the case of a plurality of bus bars, when the total power limit is less than the sum of the bus bar power limits of all of the bus bars, the power control method in the disclosure mainly includes the following steps:
S101. a total power limit of the battery charging and swap station, a first requested power of a first device group, and a second requested power of a second device group are obtained.

For example, when an installation power of the whole station is less than the sum of the bus bar power limits of all of the bus bars, the total power limit is the installation power of the whole station; and when the installation power of the whole station is greater than or equal to the sum of the bus bar power limits of all of the bus bars, the total power limit may be determined based on a first bus bar power limit of a first bus bar and a second bus bar power limit of a second bus bar, for example, the total power limit may be a sum of the first bus bar power limit and the second bus bar power limit, or a safety factor is multiplied or power consumption of all in-station power consuming devices is subtracted on this basis. The first bus bar power limit and the second bus bar power limit may be calculated or obtained in real time based on information from an upstream power grid, or may be fixed values that are artificially set based on the information from the upstream power grid. The specific obtaining methods are not limited in the disclosure, as long as the total power limit can be obtained.

The first requested power of the first device group includes a first station-side requested power and a first pile-side requested power, where the first station-side requested power includes a compartment-side total requested power of all battery compartments that need to perform charging in the first device group and power consumption (or referred to as non-charging power consumption) of the in-station power consuming devices, and the first pile-side requested power includes charging requested powers of all charging piles that need to perform external services in the first device group. The second requested power of the second device group includes a second station-side requested power and a second pile-side requested power, where the second station-side requested power includes a compartment-side total requested power of all battery compartments that need to perform charging in the second device group, and the second pile-side requested power includes charging requested powers of all charging piles that need to perform external services in the second device group. A first control unit obtains the charging requested power of each battery compartment that needs to perform charging and the non-charging power consumption by communicating with the battery compartments and the in-station power consuming devices, the first control unit obtains the charging requested power of each charging pile by communicating with a second control unit, and then the first requested power of the first device group and the second requested power of the second device group are calculated based on a grouping situation.

S103. a total requested power for the battery charging and swap station is calculated based on the first requested power and the second requested power. For example, after obtaining the first requested power and the second requested power, the first control unit calculates a sum of the two powers, that is, obtaining the total requested power for the battery charging and swap station.

S105. the total requested power is compared with the total power limit. For example, the two are compared by calculating a difference or ratio between the total power limit and the total requested power.

S107. power allocation is performed on the first device group and the second device group based on a comparison result. For example, when the total requested power is less than or equal to the total power limit, it is proved that the current total power limit can meet the total requested power. In this case, power allocation needs to be performed on the first device group and the second device group based on the total requested power. When the total requested power is greater than the total power limit, it is proved that the total power limit cannot meet a requested power of at least one of the two device groups, and further power allocation is required to avoid operating exceeding a power limit. For example, the power allocation of one of the device groups may be preferentially met, or the power may be allocated to the two allocation groups according to a specific allocation ratio. The following embodiment will describe a preferred allocation method.

When the total power limit is less than the sum of the bus bar power limits of all of the bus bars, by performing power allocation on the first device group and the second device group based on a comparison result between the total requested power and the total power limit, the disclosure implements integrated power management of the battery charging and swap station, implements flexible and efficient power allocation under a limited power, and ensures a service capability.

The following describes the preferable embodiments of the disclosure.

In an embodiment, the first station-side requested power and the second station-side requested power are determined in the following manner: obtaining a number N of required batteries; selecting N batteries with a highest state of charge from the battery swap station; calculating a total charging requested power of all batteries belonging to the first device group in the N batteries as a first compartment-side total requested power and a total charging requested power of all batteries belonging to the second device group as a second compartment-side total requested power; obtaining non-charging power consumption of the in-station power consuming devices in the battery swap station; calculating a sum of the first compartment-side total requested power and the non-charging power consumption as the first station-side requested power; and determining the second compartment-side total requested power as the second station-side requested power. The number of required batteries is determined based on a reserved battery swap order or an estimated battery swap order of the battery swap station.

For example, the battery swap station is communicatively connected to a cloud server, such as communicatively connected to the cloud server through the first control unit. Users of electric vehicles can reserve a battery swap service of a specific battery swap station through an intelligent terminal (such as a vehicle head unit, a mobile phone, a computer, or a tablet computer). After the cloud server counts reserved battery swap orders of each battery swap station, that is, counting required batteries, the cloud server sends the number of required batteries (assuming it to be N) at this moment to the battery swap station, and the battery swap station selects N batteries (including fully charged batteries) with a highest state of charge (SOC) based on the number N and sets the N batteries to a charging mode, that is, starting the batteries with a low power first (the fully charged batteries do not need to start charging), and then charging the batteries based on the required power of the batteries. Those skilled in the art know that when the batteries are located in different battery capacity ranges, the required powers thereof are different. In general, higher states of charge indicate lower required powers of the batteries. Subsequently, the first control unit determines a grouping situation of the N batteries based on IP addresses of the battery compartments where the batteries are located, and calculates a sum of the requested powers of all of the batteries belonging to the first device group as the first compartment-side total requested power and calculates a sum of the requested powers of all of the batteries belonging to the second device group as the second compartment-side total requested power. Then, the non-charging power consumption is calculated based on a required power of the in-station power consuming device in the battery swap station. Finally, the sum of the first compartment-side total requested power and the non-charging power consumption is calculated as the first station-side requested power, and the second compartment-side total requested power is directly determined as the second station-side requested power.

In another embodiment, the number N of required batteries may alternatively be determined by a cloud estimating the battery swap orders at the current moment. For example, the cloud can estimate a battery swap order status at various moments of a day based on historical battery swapping data of a battery swap station during the past week, month, several months or longer, and then determine the number N of required batteries of each time period based on the estimated battery swap order status. The specific estimation method is relatively common in the art, and will not be repeated in the disclosure again.

By determining the number N of required batteries based on the reserved battery swap order or the estimated battery swap order of the battery swap station, thereby determining the first station-side requested power and the second station-side requested power, the disclosure can allocate powers as many as possible to the battery compartments and charging piles that need to perform charging, on the premise that a service capability of the battery swap station is not affected, and effectively improve the utilization rate of the battery capacity of the station.

In an embodiment, after receiving the requested powers of all of the N batteries, the first control unit confirms groups to which the N batteries belong based on the IP addresses of the battery compartments where the batteries are located, and then calculates the sum of the first compartment-side total requested powers of the battery compartments that need to perform charging in the first device group and the non-charging power consumption as the first station-side requested power of the first device group; and calculates the sum of the second compartment-side total requested powers of all of the battery compartments that need to perform charging in the second device group as the second station-side requested power of the second device group. Meanwhile, after receiving the requested powers of the charging piles, groups to which the charging piles that need to provide services are confirmed based on the IP addresses of the charging piles, and then the sum of the requested powers of the charging piles that need to provide services in the first device group is calculated as the first pile-side requested power of the first device group; and the sum of the requested powers of the charging piles that need to provide services in the second device group is calculated as the second pile-side requested power of the second device group.

After calculating the above plurality of requested powers, the first station-side requested power and the first pile-side requested power that belong to the first device group are added to obtain the first requested power of the first device group, and the second station-side requested power and the second pile-side requested power that belong to the second device group are added to obtain the second requested power of the second device group. Finally, the first requested power and the second requested power are added to obtain the total requested power for the battery charging and swap station.

In a possible embodiment, step S107 specifically includes: if the total requested power is less than or equal to the total power limit, determining an actual allocated power for the first device group as a smaller value between the first requested power and the first bus bar power limit, and determining an actual allocated power for the second device group as a smaller value between the second requested power and the second bus bar power limit.

For example, when the total requested power is less than or equal to the total power limit, the total powers provided by two bus bars can theoretically meet the required powers of all devices, but since the power of each bus bar is also limited, it is required to ensure that the required power of each device group cannot exceed a power limit of each bus bar. In this case, the smaller value between the first requested power of the first device group and the first bus bar power limit is taken as the actual allocated power, which is allocated to the first device group; and similarly, the smaller value between the second requested power of the second device group and the second bus bar power limit is taken as the actual allocated power, which is allocated to the second device group.

In a possible embodiment, step S107 further includes: if the total requested power is greater than the total power limit, determining, based on the total power limit and a first preset allocation strategy, respective pre-allocated powers allocated to the first device group and the second device group from the total power limit; determining, based on the pre-allocated power for each device group, an actual allocated power for each device group; and performing, based on the actual allocated power for each device group, power allocation on each device group. Specifically,
when the total requested power is greater than the total power limit, it is proved that the power request of at least one of the two device groups cannot be met. In this case, to ensure that the sum of the powers allocated to the two device groups do not exceed the total power limit, the power pre-allocation is first performed on the two device groups based on the total power limit, and the respective pre-allocated powers allocated to the first device group and the second device group from the total power limit are determined.

For example, the total power limit may be equally allocated to the first device group and the second device group, so that the power obtained by the first device group is a first pre-allocated power, the power obtained by the second device group is a second pre-allocated power, and the first pre-allocated power is equal to the second pre-allocated power.

Certainly, the above first preset allocation strategy is only used as an example for illustration. In other embodiments, the first preset allocation strategy may alternative be an allocation according to the proportion of each of the first bus bar power limit and the second bus bar power limit, that is, the total power limit is allocated to the first device group and the second device group according to the proportion of each of the first bus bar power limit and the second bus bar power limit to the sum of the two. Alternatively, the first preset allocation strategy may be an allocation according to the proportion of each of the first requested power and the second requested power, that is, the total power limit is allocated to the first device group and the second device group according to the proportion of each of the first requested power and the second requested power to the sum of the two.

After the power is pre-allocated, since the pre-allocated powers obtained by the two device groups are only closely related to the allocation method, it cannot be ensured that each pre-allocated power necessarily meets its corresponding requested power and the bus bar power limit. In this case, the actual allocated power for each device group needs to be further determined based on the first pre-allocated power and the second pre-allocated power.

In a more preferred embodiment, the first pre-allocated power, the first requested power, and the first bus bar power limit are first compared, and a minimum value among the three is taken as the allocated power for the first device group, which is denoted as the first allocated power, to ensure that the first allocated power neither exceeds the first requested power nor exceeds the first bus bar power limit. Similarly, a minimum value among the second pre-allocated power, the second requested power, and the second bus bar power limit is taken as the second allocated power for the second device group.

Subsequently, a sum of the first allocated power and the second allocated power is calculated, and it is determined whether a difference between the total power limit and the sum is greater than zero, that is, it is determined whether there is a remainder in the total power limit. At the same time, it is determined whether the allocated power is equal to the pre-allocated power in the two device groups, that is, it is determined whether there is a pre-allocated power in the two device groups that is the minimum value of the three values, in other words, it is determined whether there is a device group to which a power can continue to be allocated in the two device groups.

If one of the above two determination conditions is not met, it is determined that the current first allocated power and the current second allocated power are the actual allocated power for the first device group and the actual allocated power for the second device group, in other words, there is no remainder in the total power limit, or a power cannot continue to be allocated to the two device groups.

If the above two determination conditions are met simultaneously, it is proved that the current total power limit has not been allocated completely, and there are still some device groups to which a power may continue to be allocated in the two device groups. In this case, the above difference (the remaining unallocated power) is allocated according to a second preset allocation strategy to the device group to which a power may continue to be allocated. The second preset allocation strategy is an equal allocation, an allocation according to a proportion of the bus bar power limit corresponding to each device group, or an allocation according to a proportion of the requested power of each device group. The above three allocation methods are similar to the first preset allocation strategy, and will not be repeated herein again.

After the power is allocated according to the second preset allocation strategy, the pre-allocated power for the device group is updated, and the method returns to re-determining the allocated power for each device group.

For example, if powers can continue to be allocated to both of the device groups, then the following operations are performed: equally allocating the remaining unallocated power described above to both device groups, adding the power obtained by each of the two device groups during the second allocation and the allocated power to obtain a new power allocation result as its respective pre-allocated power, returning to comparing the pre-allocated power with the requested power of each device group and the bus bar power limit, re-determining the allocated power, then performing the determination process again, and until the above two determination conditions are not met simultaneously, determining the current allocated power of each of the two device groups as the respective actual allocated power.

For another example, if powers can continue to be allocated to only one device group, then the following operations are performed: completely allocating the above difference to this device group, adding the power obtained by the device group during the second allocation and the allocated power to obtain a new pre-allocated power, returning to comparing the pre-allocated power with the requested power of the device group and the bus bar power limit, re-determining the allocated power, then performing the determination process again, and until the above two determination conditions are not met simultaneously, determining the current allocated power of each of the two device groups as the respective actual allocated power.

Certainly, the above allocation method is only a more preferred embodiment, and those skilled in the art can adjust the allocation method as long as the actual allocated powers for the two device groups do not exceed the corresponding bus bar power limits and requested powers, and the sum of the actual allocated powers for the two device groups do not exceed the total power limit. For example, the allocated power after the first allocation may be used as the actual allocated power, and when there are a plurality of re-allocation processes, the allocation result from the second allocation or the third allocation may also be used as the actual allocated power.

When the total requested power is greater than the total power limit, by first allocating the total power limit to each device group based on the first preset allocation strategy, then determining the actual allocated power for each device group based on the pre-allocated power, and then performing power allocation on each device group, the disclosure can implement maximum power allocation for each device group without exceeding the total power limit. Further, by first determining the allocated power based on the pre-allocated power, requested power, and bus bar power limit of each device group, and then when there is a remainder in the total power limit, allocating the remaining power to each device group as much as possible according to the second preset allocation strategy, the power allocation method in the disclosure can use the limited battery capacity more flexibly and efficiently.

The following describes, with reference to FIG. 3 in conjunction with the above embodiment in which the two device groups are provided in the battery charging and swap station, a first embodiment of a power control method for the battery charging and swap station in the disclosure when a total power limit is equal to a sum of bus bar power limits of all bus bars. FIG. 3 is a flowchart of a first embodiment of a power control method for a battery charging and swap station when a total power limit is equal to a sum of bus bar power limits of all bus bars according to the disclosure.

As shown in FIG. 3, in a possible embodiment, when the total power limit is equal to a sum of a first bus bar power limit and a second bus bar power limit, the power control method in the disclosure includes:
S201. obtaining a first requested power of a first device group and a second requested power of a second device group; and
S203. determining an actual allocated power for the first device group as a smaller value between the first requested power and the first bus bar power limit, and determining an actual allocated power for the second device group as a smaller value between the second requested power and the second bus bar power limit.

When the total power limit is equal to the sum of the bus bar power limits of the two device groups, it is only required to ensure that the actual used power of each device group does not exceed its corresponding bus bar power limit, so that the whole station may be operated without exceeding the power limit. Therefore, the actual allocated power for the first device group may be directly determined as the smaller value between the first requested power and the first bus bar power limit, and the actual allocated power for the second device group may be directly determined as the smaller value between the second requested power and the second bus bar power limit.

When the total power limit is equal to the sum of all bus bar power limits, by directly determining the actual allocated power for each device group as a smaller value between the requested power corresponding to the device group and the bus bar power limit, the power allocation method in the disclosure can ensure the maximum power allocation for each device group without exceeding the power limit.

It should be noted that, for the above determination of the size relationship between the total power limit and the sum of the bus bar power limits of the two device groups, additional determination steps may be added, or may be selectively set based on actual situations.

For example, during the construction of the battery charging and swap station, if it is determined that there are many of the above situations that "an installation power of the whole station is greater than, equal to, or less than the sum of the power limits of the plurality of bus bars", a determination step may be added before step S101 to first determine the size relationship between the total power limit of the whole station and the sum of the bus bar power limits.

For example: an installation power of the battery charging and swap station and the sum of the power limits of the current plurality of bus bars are obtained; a size relationship between the installation power and the sum of the power limits of the current plurality of bus bars is determined; if the installation power is less than the sum of the power limits of the current plurality of bus bars, it is determined that the total power limit is the installation power, and the total power limit is currently less than the sum of the bus bar power limits; and if the installation power is greater than the sum of the power limits of the current plurality of bus bars, it is determined that the total power limit is the sum of the power limits of the plurality of bus bars, and the total power limit is currently equal to the sum of the bus bar power limits.

For another example, during the construction of the battery charging and swap station, if there is only the situation that "the installation power of the whole station is less than the sum of the power limits of the plurality of bus bars", there is no need to add a determination step, and the method directly starts to be performed from step S101. Similarly, during the construction of the battery charging and swap station, if there is only the situation that "the installation power of the whole station is greater than or equal to the sum of the power limits of the plurality of bus bars", there is no need to add a determination step, and the method directly starts to be performed from step S201.

After allocation is performed on both the first device group and the second device group based on the actual allocated powers, further, the first control unit may use the actual allocated powers for the two device groups as a total allocation limit, and continue to perform power allocation on each battery compartment and charging pile in the groups, and therefore, on the premise of making full use of the capacity of the station, the operating power of each device group is ensured not to exceed the limit allocated to each device group, and each device group is prevented from operating exceeding a power limit.

It should be noted that, although the disclosure does not describe how to allocate a power to each battery compartment and charging pile in each device group, this does not mean that the technical solution of the disclosure cannot be implemented. Those skilled in the art can reasonably select a power allocation method for the devices in each group based on specific application scenarios, such as an allocation method that preferentially meets the required powers of all charging piles, or an allocation method that preferentially meets the required powers of all battery compartments, or an allocation method in which power allocation is performed on the battery compartments and the charging piles according to a preset allocation proportion.

In a possible embodiment, the power control method further includes: calculating a difference between the first requested power and the second requested power; determining whether the difference is within a preset difference range; if the difference is greater than or equal to a maximum value of the preset difference range, replacing a battery with a lowest state of charge in selected batteries belonging to the first device group with a battery with a highest state of charge in unselected batteries belonging to the second device group; and if the difference is less than a minimum value of the preset difference range, replacing a battery with a lowest state of charge in selected batteries belonging to the second device group with a battery with a highest state of charge in unselected batteries belonging to the first device group.

Specifically, the first requested power reflects a power required by the devices in the first device group, and the second requested power reflects a power required by the devices in the second device group. On the premise that the first bus bar power limit and the second bus bar power limit are determined, when the difference between the first requested power and the second requested power is large, even if the sum of the first requested power and the second requested power (that is, a total requested power) is not greater than the total power limit, it is easy to lead to a situation that the power of one device group is far beyond the power limit, while the power of another device group is far below the power limit, and in this case, the limited battery capacity cannot be used to a maximum extent, and the devices in the device group cannot be operated at a better power, which eventually leads to low operating efficiency of the battery charging and swap station. Therefore, when the difference between the first requested power and the second requested power is not within the preset difference range, the disclosure adjusts the requested power between the two device groups by reasonably controlling the start and stop of the battery compartments in the two device groups.

For example, the calculating of the difference between the first requested power and the second requested power is as follows. The second requested power is subtracted from the first requested power, and if the difference is greater than or equal to the maximum value of the preset difference range, it is proved that the first requested power is much greater than the second requested power, the first device group is prone to the situation that the requested power is far beyond the limit, and the second device group is prone to the situation that the requested power is far below the limit. In this case, a battery with a lowest state of charge in the selected batteries belonging to the first device group is replaced with a battery with a highest state of charge in the unselected batteries belonging to the second device group, that is, a battery compartment corresponding to the battery with the lowest state of charge in the plurality of battery compartments that are performing charging in the first device group is controlled to stop operating, and a battery compartment corresponding to the battery with the highest state of charge in the plurality of battery compartments that are not performing charging in the second device group is controlled to start operating, so as to reduce the difference between the requested powers of the two device groups, and perform this operation in a loop until the difference between the first requested power and the second requested power is within a preset difference threshold range.

Similarly, if the difference is less than or equal to the minimum value of the preset difference range, it is proved that the first requested power is much less than the second requested power, the first device group is prone to the situation that the requested power is far below the limit, and the second device group is prone to the situation that the requested power is far beyond the limit. In this case, a battery with a lowest state of charge in the selected batteries belonging to the second device group is replaced with a battery with a highest state of charge in the unselected batteries belonging to the first device group, that is, a battery compartment corresponding to the battery with the lowest state of charge in the plurality of battery compartments that are performing charging in the second device group is controlled to stop operating, and a battery compartment corresponding to the battery with the highest state of charge in the plurality of battery compartments that are not performing charging in the first device group is controlled to start operating, so as to reduce the difference between the two, and perform this operation in a loop until the difference between the first requested power and the second requested power is within a preset difference threshold range.

The preset difference range may be determined based on actual conditions of the first bus bar power limit and the second bus bar power limit. When the first bus bar power limit is relatively close to the second bus bar power limit, the preset difference range can be set to be smaller, otherwise, the preset difference range can be set to be larger.

By comparing the requested powers of the two device groups, and adjusting the requested powers of the two device groups when the difference between the two is not within the preset difference range, the disclosure can allocate powers as many as possible to be used by the two device groups, use the limited battery capacity more efficiently, and improve the utilization rate of the capacity of the station.

In an embodiment, the power control method further includes: obtaining a first real-time power of the first device group; comparing the first real-time power with the first bus bar power limit; and if the first real-time power is greater than the first bus bar power limit, controlling the power of the first device group to be reduced to the first bus bar power limit.

Specifically, on the premise that the battery swap station is provided with the above first electricity meter, the first real-time power of the first device group is obtained through the first electricity meter. Then, the first real-time power is compared with the first bus bar power limit, and if the first real-time power is greater than the first bus bar power limit, it is proved that the current operating power of the first device group exceeds the first bus bar power limit, which is easy to cause over-limit tripping and device failure. In this case, a difference between the first real-time power and the first bus bar power limit is calculated, and the total power of the first device group is controlled to reduce the difference, so that the power of the first device group is reduced to the first bus bar power limit, so as to avoid the above situation. Reducing the total power of the first device group can be implemented in the following manners:
Manner 1: after calculating the difference between the first real-time power and the first bus bar power limit, determining a charging pile/battery compartment with an operating power greater than the difference from the charging piles/battery compartments in the first device group, and then reducing the difference based on the operating power of the charging pile/battery compartment.
Manner 2: after calculating the difference between the first real-time power and the first bus bar power limit, equally allocating the difference to all charging devices (charging piles and battery compartments) in the first device group, and then controlling the power of all of the charging devices to be reduced.

Likewise, in an embodiment, the power control method further includes: obtaining a second real-time power of the second device group; comparing the second real-time power with the second bus bar power limit; and if the second real-time power is greater than the second bus bar power limit, controlling the power of the second device group to be reduced to the second bus bar power limit.

Specifically, on the premise that the battery swap station is provided with the above second electricity meter, the second real-time power of the second device group is obtained through the second electricity meter. Then, the second real-time power is compared with the second bus bar power limit, and if the second real-time power is greater than the second bus bar power limit, it is proved that the current operating power of the second device group exceeds the second bus bar power limit, which is easy to cause over-limit tripping and device failure. In this case, a difference between the second real-time power and the second bus bar power limit is calculated, and the total power of the second device group is controlled to reduce the difference, so that the power of the second device group is reduced to the second bus bar power limit, so as to avoid the above situation. Reducing the total power of the second device group can be implemented in the following manners:
Manner 1: after calculating the difference between the second real-time power and the second bus bar power limit, determining a charging pile/battery compartment with an operating power greater than the difference from the charging piles/battery compartments in the second device group, and then reducing the difference based on the operating power of the charging pile/battery compartment.
Manner 2: after calculating the difference between the second real-time power and the second bus bar power limit, equally allocating the difference to all charging devices (charging piles and battery compartments) in the second device group, and then controlling the power of all of the charging devices to be reduced.

Certainly, after the charging pile/battery compartment reduces the power, which will not last for a long time, when the first control unit interacts with the second control unit next time, power allocation can be performed again.

During power allocation, by performing real time monitoring on the real-time power of each device group, and controlling the power allocation of devices in the device group based on the real-time power and a power limit of each bus bar, the disclosure can perform power allocation strictly under the power limit of each bus bar, so as to avoid operation exceeding the power limit from the source.

Certainly, when the measurement and control electricity meter is not provided, the real-time power of the device group can also be calculated by obtaining the real-time power of all battery compartments, in-station power consuming devices, and charging piles in the device group.

In an embodiment, the power control method further includes: obtaining a communication status of the charging pile; and if there is a charging pile in a disconnected state, allocating a preset power to the charging pile; and/or obtaining a communication status of the battery compartment; and if there is a battery compartment in a disconnected state, deactivating the battery compartment and selecting a battery compartment corresponding to a battery with a highest state of charge from the remaining battery compartments to perform power allocation.

For example, during power allocation between two device groups, it is inevitable that there will be charging piles on which power allocation cannot be performed due to communication failures. In this case, when it is detected that the communication of a charging pile is disconnected, the preset power may be allocated to the charging pile, to avoid impact of its uncertainty on an overall power allocation strategy. Certainly, after the preset power is allocated to the charging pile, in the next power allocation, the preset power needs to be subtracted from the power limit of the device group where the charging pile is located.

Similarly, when there is a battery compartment in a disconnected state, a preset power can also be allocated to the battery compartment in this manner. In addition, when there are idle battery compartments, the battery compartment in the disconnected state can also be deactivated, and a battery compartment with a battery having a highest state of charge can be selected from the idle battery compartments to perform power allocation.

By allocating the preset power to the charging pile when the communication of the charging pile is disconnected, deactivating the battery compartment and selecting a battery compartment corresponding to a battery with a highest state of charge from the remaining battery compartments to perform power allocation when the communication of the battery compartment is disconnected, the disclosure also avoids the occurrence of tripping and device damage caused by the over-limited power of the bus bars when the charging piles, battery compartments, and other devices are anomalous, and reduces the operation and maintenance costs of the whole station.

### Embodiment 3

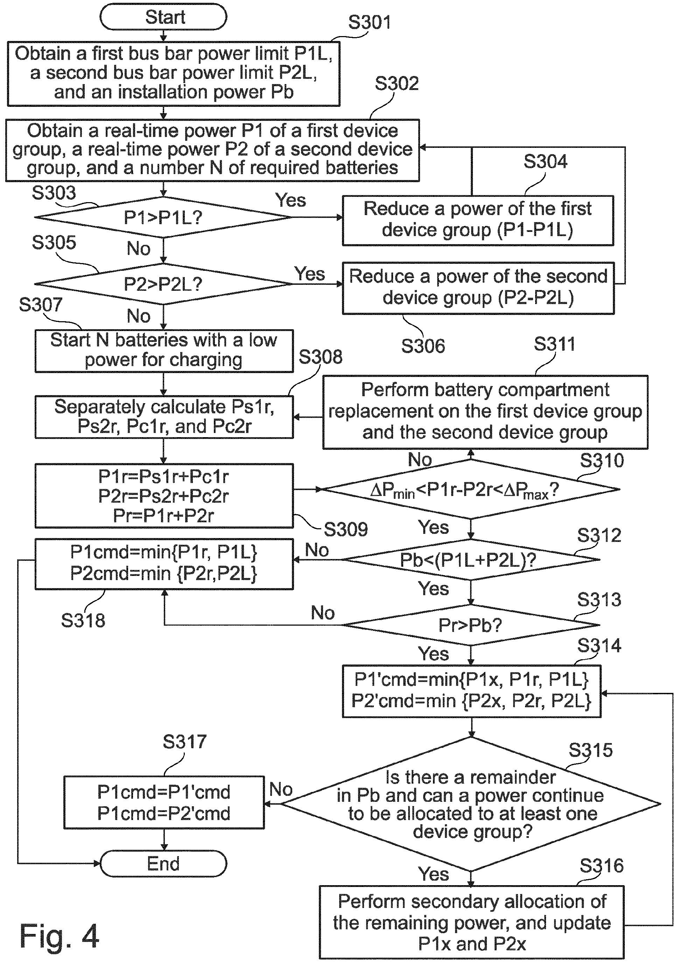

A possible control process in the disclosure will be described below with reference to FIG. 4. FIG. 4 is a logic diagram of a possible embodiment of a power control method for a battery charging and swap station according to the disclosure.

As shown in FIG. 4, step S301 is first performed to obtain a first bus bar power limit P 1L of a first bus bar, a second bus bar power limit P2L of a second bus bar, and an installation power Pb of the battery charging and swap station, and then step S302 is performed.

S302. a real-time power P1 of a first device group and a real-time power P2 of a second device group are obtained, a number N of required batteries is received from a cloud, and then step S303 is performed.

S303. whether P1 > P1L is met is determined. If it is met, step S304 is performed; and if it is not met, step S305 is performed.

S304. P1-P1L is calculated, the power of the charging pile with a highest operating power in the first device group is controlled to be reduced (P1-P1L), and then the method returns to performing step S302.

S305. whether P2 > P2L is met is determined. If it is met, step S306 is performed; and if it is not met, step S307 is performed.

S306. P2-P2L is calculated, the power of the charging pile with a highest operating power in the second device group is controlled to be reduced (P2-P2L), and then the method returns to performing step S302.

S307. N batteries with a highest state of charge are started with a low power for charging, and then step S308 is performed.

S308. a first station-side requested power Ps1r and a first pile-side requested power Pclr of the first device group, and a second station-side requested power Ps2r and a second pile-side requested power Pc2r of the second device group are calculated; and then step S309 is performed.

Ps1r is calculated from the sum of the charging powers of all activated battery compartments in the first device group plus non-charging power consumption of the in-station power consuming devices, and Ps2r is calculated from the sum of the charging powers of the activated battery compartments in the second device group; and Pc1r is determined by the sum of the requested powers of all charging piles that are providing charging services in the first device group, and Pc2r is determined by the sum of the requested powers of all charging piles that are providing charging services in the second device group.

S309. a first requested power P1r = Ps1r + Pc1r of the first device group, a second requested power P2r = Ps2r + Pc2r of the second device group, and a total requested power Pr = P1r + P2r for the battery charging and swap station are calculated, and then step S310 is performed.

5310. whether ΔPmin < P1r-P2r < ΔPmax is met is determined. If it is not met, step S311 is performed; and if it is met, step S312 is performed. (ΔPmin, ΔPmax) is a preset difference range.

S311. battery compartment replacement is performed on the first device group and the second device group. Specifically, if P1r-P2r ≥ ΔPmax, a battery compartment corresponding to a battery with a lowest state of charge in selected batteries belonging to the first device group is stopped for charging, and a battery compartment corresponding to a battery with a highest state of charge in unselected batteries belonging to the second device group is started for charging; and ifP1r-P2r ≤ ΔPmin, a battery compartment corresponding to a battery with a lowest state of charge in selected batteries belonging to the second device group is stopped for charging, and a battery compartment corresponding to a battery with a highest state of charge in unselected batteries belonging to the first device group is started for charging. After the replacement is completed, the method returns to performing step S308.

S312. whether Pb ≤ (P1L + P2L) is met is determined. If it is met, step S313 is performed; and if it is not met, step S318 is performed.

S313. whether Pr > Pb is met is determined. If it is met, step S314 is performed; and if it is not met, step S318 is performed.

S314. a pre-allocated power P1x = Pb/2 of the first device group and a pre-allocated power P2x = Pb/2 of the second device group are determined, an allocated power P1'cmd = min{P1x, P1r, P1L} of the first device group and an allocated power P2'cmd = min{P2x, P2r, P2L} of the second device group are further determined, and then step S315 is performed.

S315. whether there being a remainder in Pb and a power being able to continue to be allocated to at least one device group are met is determined. If they are met, step S316 is performed; and if they are not met, step S317 is performed. Whether there is a remainder in Pb is specifically determined by determining whether Pb-(P1'cmd + P2'cmd) > 0 is met, and whether a power can continue to be allocated to at least one device group may be determined by determining whether at least one of the following two conditions is met; condition 1: whether P1x is less than both P1r and P1L, and condition 2: whether P2x is less than both P2r and P2L.

S316. secondary allocation of the remaining power is performed, and P1x and P2x are updated based on an allocation result. For example, if a power can continue to be allocated to both device groups, the difference calculated from Pb-(P1'cmd + P2'cmd) is equally allocated to the first device group and the second device group, and the calculated new powers after the secondary allocation are used as new pre-allocated powers P1x and P2x. The method returns to performing step 314, to calculate the allocated powers P1'cmd and P2'cmd again and proceed to loop.

S317. an actual allocated power Plcmd = P1'cmd for the first device group, and an actual allocated power P2cmd = P2'cmd for the second device group are determined.

S318. an actual allocated power P1cmd = min{P1r, P1L} for the first device group, and an actual allocated power P2cmd = min{P2r, P2L} for the second device group are determined.

Although the steps are described in the above order in this embodiment, those skilled in the art can understand that in order to achieve the effects of this embodiment, different steps are not necessarily performed in this order, but can be performed simultaneously (in parallel) or in a reverse order, and these simple variations are within the scope of protection of the disclosure. For example, steps S301 and S302 may be performed simultaneously, or may be performed in a reverse order.

### Embodiment 4

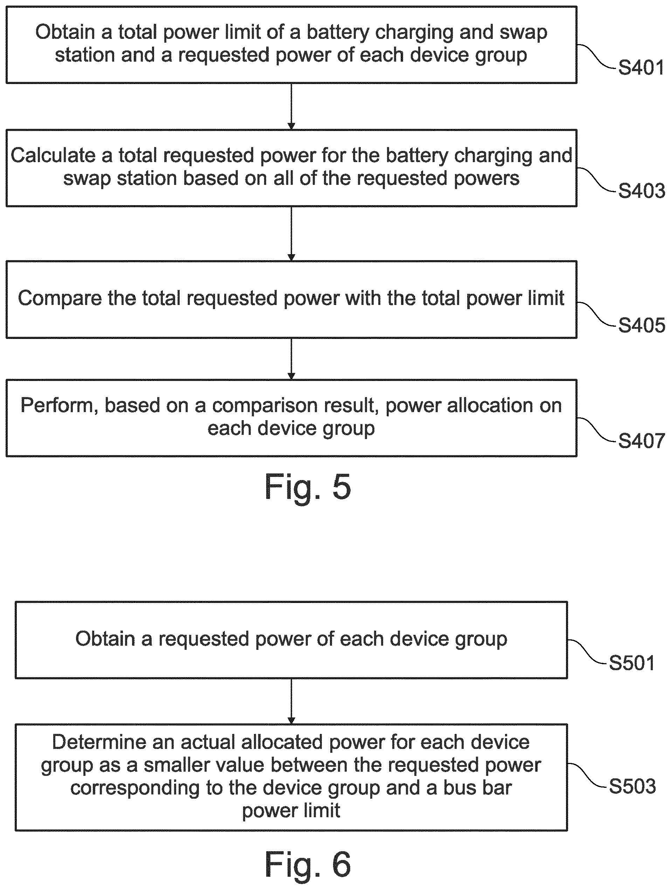

The following briefly describes, with reference to FIG. 5, a second embodiment of a power control method for a battery charging and swap station when a total power limit is less than a sum of bus bar power limits of all bus bars according to the disclosure. FIG. 5 is a flowchart of a second embodiment of a power control method for a battery charging and swap station when a total power limit is less than a sum of bus bar power limits of all bus bars according to the disclosure.

In this embodiment, the battery charging and swap station includes a plurality of charging devices, the charging device includes at least one of a battery compartment and a charging pile, the charging devices are divided into a plurality of device groups, each device group is powered by one single bus bar, and each bus bar has its own bus bar power limit. As shown in FIG. 5, when the total power limit is less than the sum of the bus bar power limits of all of the bus bars, the power control method in the disclosure includes:
S401. obtaining the total power limit of the battery charging and swap station and a requested power of each device group;
S403. calculating a total requested power for the battery charging and swap station based on all of the requested powers;
S405. comparing the total requested power with the total power limit; and
S407. performing, based on a comparison result, power allocation on each device group.

In step S401, when the total power limit is less than the sum of the bus bar power limits of all of the bus bars, the total power limit of the battery charging and swap station is an installation power, and the requested power of each device group is determined based on a sum of requested powers of all charging devices in the device group.

In step S403, a sum of the requested powers of all of the device groups is calculated as the total requested power for the battery charging and swap station.

Step S407 includes: if the total requested power is less than or equal to the total power limit, determining an actual allocated power for each device group as a smaller value between the requested power corresponding to the device group and the bus bar power limit.

Step S407 further includes: if the total requested power is greater than the total power limit, determining, based on the total power limit and a first preset allocation strategy, a pre-allocated power allocated to each device group from the total power limit; determining, based on the pre-allocated power for each device group, an actual allocated power for each device group; and performing, based on the actual allocated power for each device group, power allocation on each device group.

Specifically, the first preset allocation strategy is an equal allocation, an allocation according to a proportion of the bus bar power limit corresponding to each device group, or an allocation according to a proportion of the requested power of each device group, and the specific meaning of each allocation strategy may refer to Embodiment 2, which will not be repeated in this embodiment. After allocating the total power limit to each device group based on the first preset allocation strategy, each device group obtains the pre-allocated power. Then, for each device group, a minimum value among the pre-allocated power, the requested power, and the bus bar power limit that are corresponding to the device group is taken as an allocated power for the device group.

Subsequently, whether both conditions that a difference between the total power limit and a sum of all allocated powers is greater than zero and there are a number of device groups with an allocated power equal to a pre-allocated power are met simultaneously is determined; if the above two conditions are met simultaneously, it means that there is a remainder in the current total power limit, and there are still a number of device groups to which a power can continue to be allocated. In this case, the above difference is secondarily allocated according to a second preset allocation strategy to the number of device groups to which a power can continue to be allocated.

After the secondary allocation, the pre-allocated powers of the number of device groups are updated based on allocation results, and the allocated power for each device group is re-determined based on the updated pre-allocated power, that is, the method proceeds to a determination loop until the above two determination conditions are not met simultaneously.

When the above two conditions are not met simultaneously, it is determined that the actual allocated power for each device group is a current latest pre-allocated power.

The above second preset allocation strategy is an equal allocation, an allocation according to a proportion of the bus bar power limit corresponding to the number of device groups, or an allocation according to a proportion of the requested power of the number of device groups. The meaning thereof is similar to that of the first preset allocation strategy, and details are not repeated.

The following describes, with reference to FIG. 6, a second embodiment of a power control method for a battery charging and swap station when a total power limit is equal to a sum of bus bar power limits of all bus bars according to the disclosure. FIG. 6 is a flowchart of a second embodiment of a power control method for a battery charging and swap station when a total power limit is equal to a sum of bus bar power limits of all bus bars according to the disclosure.

As shown in FIG. 6, in a possible embodiment, when the total power limit is equal to the sum of the bus bar power limits of all of the bus bars, the power control method in the disclosure includes:
S501. obtaining a requested power of each device group; and
S503. determining an actual allocated power for each device group as a smaller value between the requested power corresponding to the device group and the bus bar power limit.

When the total power limit is equal to the sum of the bus bar power limits of all of the bus bars, it is only required to ensure that the actual used power of each device group does not exceed its corresponding bus bar power limit, so that the whole station can be operated without exceeding the power limit. Therefore, it can be directly determined that the actual allocated power for each device group is the smaller value between the requested power corresponding to the device group and the bus bar power limit.

After each device group is allocated based on the actual allocated power, further, the actual allocated power for each device group may be used as a total allocation limit of the device group, to continue to perform power allocation on each charging device in the groups, and therefore, on the premise of making full use of the capacity of the station, the operating power of each device group is ensured not to exceed the limit allocated to each device group, and each device group is prevented from operating exceeding a power limit.

In a possible embodiment, the power control method in the disclosure further includes: obtaining an installation power of the battery charging and swap station and the sum of the power limits of the current plurality of bus bars; determining a size relationship between the installation power and the sum of the power limits of the current plurality of bus bars; if the installation power is less than the sum of the power limits of the current plurality of bus bars, determining that the total power limit is the installation power, and the total power limit is currently less than the sum of the bus bar power limits; and if the installation power is greater than the sum of the power limits of the current plurality of bus bars, determining that the total power limit is the sum of the power limits of the plurality of bus bars, and the total power limit is currently equal to the sum of the bus bar power limits.

In an alternative embodiment, one of the two cases may be directly performed without determining the size relationship between the total power limit of the current battery charging and swap station and the sum of all of the bus bar power limits.

In an embodiment, when some device groups in all device groups include a plurality of battery compartments, a compartment-side total requested power of each device group of the some device groups is determined in the following manner: obtaining a number N of required batteries; selecting N traction batteries with a highest state of charge from all of the battery compartments; and respectively calculating charging requested powers of all batteries belonging to each device group in the N traction batteries, as the compartment-side total requested power of each device group. The number of required batteries is determined based on a reserved battery swap order or an estimated battery swap order of the battery swap station. It should be noted that this control step is similar to that in Embodiment 2. For details, reference may be made to the description of Embodiment 2, which will not be repeated herein again.

In an embodiment, when at least two device groups in all of the device groups include a plurality of battery compartments, the power control method further includes: for the at least two device groups, calculating a difference between the requested powers of any two of the device groups; determining whether the difference is within a preset difference range; and if the difference is not within the preset difference range, replacing a traction battery with a lowest state of charge in selected traction batteries belonging to a device group with a higher requested power with a traction battery with a highest state of charge in unselected traction batteries belonging to a device group with a lower requested power.

Three device groups are taken as an example, if a first device group and a second device group include a plurality of battery compartments, and a third device group only includes charging piles, requested powers of the first device group and the second device group will be compared, and when the difference between the two is not within the preset difference range, the requested power between the two may be balanced by adjusting the turn-on and turn-off of the battery compartment. This control step is similar to that in Embodiment 2. For details, reference may be made to the description of Embodiment 2, which will not be repeated herein again.

For another example, if each of the three device groups includes a plurality of battery compartments, the above operation of balancing the requested power needs to be performed on every two device groups of the three device groups until the requested power difference between any two of the three device groups is within the preset difference range between the two.

In an embodiment, for each device group, the power control method further includes: obtaining a real-time power of the device group; comparing the real-time power with a bus bar power limit corresponding to the device group; and if the real-time power is greater than the bus bar power limit, controlling the power of the device group to be reduced to the bus bar power limit.

Specifically, the step of "controlling the power of the device group to be reduced to the bus bar power limit" further includes: calculating a difference between the real-time power and the bus bar power limit; selecting a charging device with an operating power greater than the difference from the device group; and controlling the operating power of the selected charging device to reduce the difference; or calculating a difference between the real-time power and the bus bar power limit; and equally allocating the difference to all charging devices in the device group. It should be noted that this control step is similar to that in Embodiment 2. For details, reference may be made to the description of Embodiment 2, which will not be repeated herein again.

In an embodiment, the power control method further includes: on the premise that the charging device includes a charging pile, obtaining a communication status of the charging pile; and if there is a charging pile in a disconnected state, allocating a preset power to the charging pile; and/or on the premise that the charging device includes a plurality of battery compartments, obtaining communication statuses of the battery compartments; and if there is a battery compartment in a disconnected state, deactivating the battery compartment and selecting a battery compartment corresponding to a battery with a highest state of charge from the remaining battery compartments to perform power allocation. It should be noted that this control step is similar to that in Embodiment 2. For details, reference may be made to the description of Embodiment 2, which will not be repeated herein again.

Those skilled in the art can understand that, on the premise of Embodiment 2 to Embodiment 4, if a configuration of the battery charging and swap station is changed, the above control method needs to be adjusted accordingly. For example, when the charging device does not include a battery compartment, the above method for determining the compartment-side total requested power can be omitted; and for another example, when the premise that at least two device groups of the plurality of device groups include a plurality of battery compartments is not met, the above method for balancing the requested power between two device groups can be omitted.

### Embodiment 5

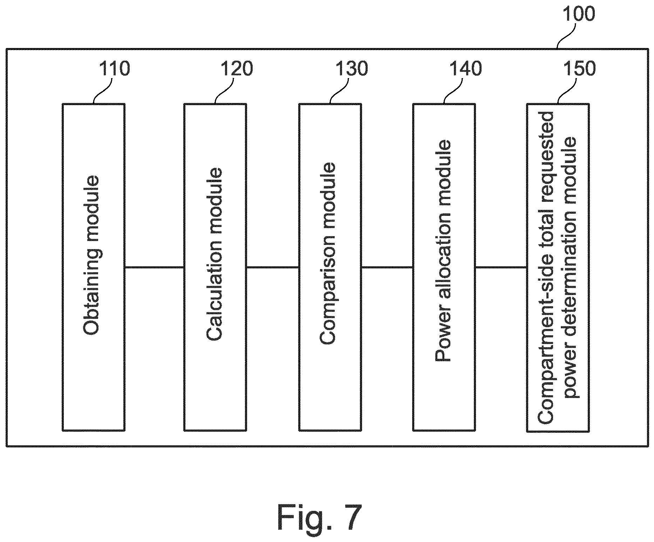

The following briefly describes, with reference to FIG. 7, a power control system for a battery charging and swap station according to the disclosure. FIG. 7 is a system diagram of a power control system for a battery charging and swap station according to the disclosure.

As shown in FIG. 7, the power control system 100 for the battery charging and swap station according to the disclosure includes an obtaining module 110, a calculation module 120, a comparison module 130, and a power allocation module 140. When a total power limit is less than a sum of power limits of all bus bars, the obtaining module 110 is configured to obtain the total power limit of the battery charging and swap station and a requested power of each device group; the calculation module 120 is configured to calculate a total requested power for the battery charging and swap station based on all of the requested powers; the comparison module 130 is configured to compare the total requested power with the total power limit; and the power allocation module 140 is configured to perform, based on a comparison result, power allocation on each device group, where the total power limit is determined based on a bus bar power limit of each bus bar. In an embodiment, for detailed description of function implementation, reference may be made to the description of steps S 101 to S107.

In an embodiment, the power allocation module 140 is further configured to perform, based on the comparison result, power allocation on each device group in the following manner: if the total requested power is greater than the total power limit, determining, based on the total power limit and a first preset allocation strategy, a pre-allocated power allocated to each device group from the total power limit; determining, based on the pre-allocated power for each device group, an actual allocated power for each device group; and performing, based on the actual allocated power for each device group, power allocation on each device group, where the first preset allocation strategy is an equal allocation, an allocation according to a proportion of the bus bar power limit corresponding to each device group, or an allocation according to a proportion of the requested power of each device group. For detailed description of function implementation, reference may be made to the description of the above method steps.

In an embodiment, the power allocation module 140 is further configured to determine, based on the pre-allocated power for each device group, the actual allocated power for each device group in the following manner: for each device group, taking a minimum value among the pre-allocated power, the requested power, and the bus bar power limit that are corresponding to the device group as an allocated power for the device group; determining whether conditions that a difference between the total power limit and a sum of all allocated powers is greater than zero and there are a number of device groups with an allocated power equal to a pre-allocated power are met; if the conditions are met, allocating the difference to the number of device groups according to a second preset allocation strategy; updating pre-allocated powers for the number of device groups based on allocation results, and returning to re-determining the allocated power for each device group; and if the conditions are not met, determining the actual allocated power for each device group as a current pre-allocated power, where the second preset allocation strategy is an equal allocation, an allocation according to a proportion of the bus bar power limit corresponding to the number of device groups, or an allocation according to a proportion of the requested power of the number of device groups. For detailed description of function implementation, reference may be made to the description of the above method steps.

In an embodiment, the power allocation module 140 is further configured to perform, based on the comparison result, power allocation on each device group in the following manner: if the total requested power is less than or equal to the total power limit, determining an actual allocated power for each device group as a smaller value between the requested power corresponding to the device group and the bus bar power limit. For detailed description of function implementation, reference may be made to the description of the above method steps.

In an embodiment, when the total power limit is equal to the sum of the bus bar power limits of all of the bus bars, the obtaining module is further configured to obtain the requested power of each device group; the power allocation module is further configured to determine an actual allocated power for each device group as a smaller value between the requested power corresponding to the device group and the bus bar power limit. In an embodiment, for detailed description of function implementation, reference may be made to the description of steps S201 to S203.

In an embodiment, when some device groups include a plurality of battery compartments, the power control system 100 further includes a compartment-side total requested power determination module 150 configured to determine a compartment-side total requested power of each device group of the some device groups in the following manner: obtaining a number N of required batteries; selecting N traction batteries with a highest state of charge from all of the battery compartments; and respectively calculating charging requested powers of all batteries belonging to each device group in the N traction batteries, as the compartment-side total requested power of each device group. The number of required batteries is determined based on a reserved battery swap order or an estimated battery swap order of the battery swap station. For detailed description of function implementation, reference may be made to the description of the above method steps.

In an embodiment, when at least two device groups of the plurality of device groups include a plurality of battery compartments, for the at least two device groups, the calculation module 120 is further configured to calculate a difference between the requested powers of any two of the device groups; the comparison module 130 is further configured to determine whether the difference is within a preset difference range; and the power allocation module 140 is further configured to, when the difference is not within the preset difference range, replace a traction battery with a lowest state of charge in selected traction batteries belonging to a device group with a higher requested power with a traction battery with a highest state of charge in unselected traction batteries belonging to a device group with a lower requested power. For detailed description of function implementation, reference may be made to the description of the above method steps.

In an embodiment, for each device group, the obtaining module 110 is further configured to obtain a real-time power of the device group; the comparison module 130 is further configured to compare the real-time power with a bus bar power limit corresponding to the device group; and the power allocation module 140 is further configured to, when the real-time power is greater than the bus bar power limit, control the power of the device group to be reduced to the bus bar power limit. For detailed description of function implementation, reference may be made to the description of the above method steps.

In an embodiment, the power allocation module 140 is further configured to control the power of the device group to be reduced to the bus bar power limit in the following manner: calculating a difference between the real-time power and the bus bar power limit; selecting a charging device with an operating power greater than the difference from the device group; and controlling the operating power of the selected charging device to reduce the difference; or calculating a difference between the real-time power and the bus bar power limit; and equally allocating the difference to all charging devices in the device group. For detailed description of function implementation, reference may be made to the description of the above method steps.

In an embodiment, on the premise that the charging device includes a charging pile, the obtaining module 110 is further configured to obtain a communication status of the charging pile; and the power allocation module 140 is further configured to allocate, if there is a charging pile in a disconnected state, a preset power to the charging pile; and/or on the premise that the charging device includes a plurality of battery compartments, the obtaining module 110 is further configured to obtain communication statuses of the battery compartments; and the power allocation module 140 is further configured to, if there is a battery compartment in a disconnected state, deactivate the battery compartment and select a battery compartment corresponding to a battery with a highest state of charge from the remaining battery compartments to perform power allocation. For detailed description of function implementation, reference may be made to the description of the above method steps.

It should be noted that the power control system provided in the above embodiments is only illustrated by the division of the above functional modules (such as the obtaining module, the calculation module, the comparison module, the power allocation module, and the station-side requested power determination module). In practical applications, the above functional modules can be implemented by different functional units according to requirements, that is, the functional modules in the embodiments are further split or combined, for example, the functional modules in the above embodiments may be combined into one functional module, or further split into a plurality of sub-modules to complete all or some of the functions described above. The names of the functional modules involved in the embodiments are merely for distinguishing purpose and are not to be construed as limiting the disclosure.

Those skilled in the art can understand that all or some of the procedures in the method of the above embodiments of the disclosure may also be implemented by a computer program instructing relevant hardware. The computer program may be stored in a computer-readable storage medium, and when the computer program is executed by a processor, the steps of the above method embodiments can be implemented. The computer program includes computer program code, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Various embodiments regarding components in the disclosure may be implemented in hardware, or implemented by software modules running on one or more processors, or implemented in combinations thereof. Those skilled in the art should understand that a microprocessor or a digital signal processor (DSP) may be used in practice to implement some or all of the functions of some or all of the components in the server and client according to the embodiments of the disclosure. The disclosure may alternatively be implemented as devices or device programs (for example, PC programs and PC program products) for performing some or all of the methods as described herein. Such programs for implementing the disclosure may be stored on a PC readable medium, or may be in the form of one or more signals. Such signals may be obtained by downloading from an Internet website, or provided on a carrier signal, or provided in any other form.

### Embodiment 6

The disclosure further provides a computer-readable storage medium. In an embodiment of the computer-readable storage medium according to the disclosure, the computer-readable storage medium may be configured to store a program for performing the power control method for the battery charging and swap station in the above method embodiment, and the program may be loaded and run by a processor to implement the above the power control method for the battery charging and swap station. For ease of description, only parts related to the embodiments of the disclosure are shown. For specific technical details that are not disclosed, reference may be made to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

### Embodiment 7

The disclosure further provides a control apparatus. In an embodiment of the control apparatus according to the disclosure, the control apparatus includes a processor and a memory. The memory may be configured to store a program for performing the power control method for the battery charging and swap station in the above method embodiment, and the processor may be configured to execute the program in the memory. The program includes, but is not limited to, the program for performing the power control method for the battery charging and swap station in the above method embodiment. For ease of description, only parts related to the embodiments of the disclosure are shown. For specific technical details that are not disclosed, reference may be made to the method part of the embodiments of the disclosure. The control apparatus may be an apparatus device formed by various electronic devices.

### Embodiment 8

The disclosure further provides a battery charging and swap station, the battery charging and swap station includes a plurality of charging devices, all of the charging devices are divided into a plurality of device groups, each device group is powered by one bus bar alone, and the battery charging and swap station further includes the control apparatus described in Embodiment 7 above.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. Those skilled in the art can make equivalent changes or substitutions to the related technical features without departing from the principle of the disclosure, and all the technical solutions with such changes or substitutions shall fall within the scope of protection of the disclosure.

## Claims

1. A power control method for a battery charging and swap station, wherein the battery charging and swap station comprises a plurality of charging devices, all of the charging devices are divided into a plurality of device groups, and each device group is powered by one bus bar alone,
wherein the charging device comprises at least one of a charging pile and a battery compartment, the battery compartment is configured to charge a traction battery, and the charging pile is configured to charge a new energy vehicle, and
the power control method comprises:
obtaining a total power limit of the battery charging and swap station and a requested power of each device group;
calculating a total requested power for the battery charging and swap station based on all of the requested powers;
comparing the total requested power with the total power limit; and
performing, based on a comparison result, power allocation on each device group,
wherein the total power limit is less than a sum of bus bar power limits of all of the bus bars.

2. The power control method for the battery charging and swap station according to claim 1, wherein the step of "performing, based on a comparison result, power allocation on each device group" further comprises:
if the total requested power is greater than the total power limit, determining, based on the total power limit and a first preset allocation strategy, a pre-allocated power allocated to each device group from the total power limit;
determining, based on the pre-allocated power for each device group, an actual allocated power for each device group; and
performing, based on the actual allocated power for each device group, power allocation on each device group,
wherein the first preset allocation strategy is an equal allocation, an allocation according to a proportion of the bus bar power limit corresponding to each device group, or an allocation according to a proportion of the requested power of each device group.

3. The power control method for the battery charging and swap station according to claim 2, wherein the step of "determining, based on the pre-allocated power for each device group, an actual allocated power for each device group" further comprises:
for each device group, taking a minimum value among the pre-allocated power, the requested power, and the bus bar power limit that are corresponding to the device group as an allocated power for the device group;
determining whether conditions that a difference between the total power limit and a sum of all allocated powers is greater than zero and there are a number of device groups with an allocated power equal to a pre-allocated power are met;
if the conditions are met, allocating the difference to the number of device groups according to a second preset allocation strategy;
updating pre-allocated powers for the number of device groups based on allocation results, and returning to re-determining the allocated power for each device group; and
if the conditions are not met, determining the actual allocated power for each device group as a current pre-allocated power,
wherein the second preset allocation strategy is an equal allocation, an allocation according to a proportion of the bus bar power limit corresponding to the number of device groups, or an allocation according to a proportion of the requested power of the number of device groups.

4. The power control method for the battery charging and swap station according to claim 1, 2, or 3, wherein the step of "performing, based on a comparison result, power allocation on each device group" further comprises:
if the total requested power is less than or equal to the total power limit, determining an actual allocated power for each device group as a smaller value between the requested power corresponding to the device group and the bus bar power limit.

5. The power control method for the battery charging and swap station according to any one of claims 1 to 4, wherein the power control method further comprises:
obtaining the requested power of each device group; and
determining an actual allocated power for each device group as a smaller value between the requested power corresponding to the device group and the bus bar power limit,
wherein the total power limit is equal to the sum of bus bar power limits of all of the bus bars.

6. The power control method for the battery charging and swap station according to any one of claims 1 to 5, wherein when some device groups comprise a plurality of battery compartments, a compartment-side total requested power of each device group of the some device groups is determined in the following manner:
obtaining a number N of required batteries;
selecting N traction batteries with a highest state of charge from all of the battery compartments; and
respectively calculating charging requested powers of all batteries belonging to each device group in the N traction batteries, as the compartment-side total requested power of each device group,
wherein the number of required batteries is determined based on a reserved battery swap order or an estimated battery swap order of the battery swap station.

7. The power control method for the battery charging and swap station according to claim 6, wherein when at least two device groups of the plurality of device groups comprise a plurality of battery compartments, the power control method further comprises:
for the at least two device groups, calculating a difference between the requested powers of any two of the device groups;
determining whether the difference is within a preset difference range; and
if the difference is not within the preset difference range, replacing a traction battery with a lowest state of charge in selected traction batteries belonging to a device group with a higher requested power with a traction battery with a highest state of charge in unselected traction batteries belonging to a device group with a lower requested power.

8. The power control method for the battery charging and swap station according to any one of claims 1 to 7, wherein for each device group, the power control method further comprises:
obtaining a real-time power of the device group;
comparing the real-time power with a bus bar power limit corresponding to the device group; and
if the real-time power is greater than the bus bar power limit, controlling the power of the device group to be reduced to the bus bar power limit.

9. The power control method for the battery charging and swap station according to claim 8, wherein the step of "controlling the power of the device group to be reduced to the bus bar power limit" further comprises:
calculating a difference between the real-time power and the bus bar power limit;
selecting a charging device with an operating power greater than the difference from the device group; and
controlling the operating power of the selected charging device to reduce the difference; or
calculating a difference between the real-time power and the bus bar power limit; and
equally allocating the difference to all charging devices in the device group.

10. The power control method for the battery charging and swap station according to any one of claims 1 to 9, wherein the power control method further comprises:
on the premise that the charging device comprises a charging pile, obtaining a communication status of the charging pile; and if there is a charging pile in a disconnected state, allocating a preset power to the charging pile; and/or
on the premise that the charging device comprises a plurality of battery compartments, obtaining communication statuses of the battery compartments; and if there is a battery compartment in a disconnected state, deactivating the battery compartment and selecting a battery compartment corresponding to a battery with a highest state of charge from the remaining battery compartments to perform power allocation.

11. A power control system for a battery charging and swap station, the system preferably being adapted to perform the method of any one of claims 1 to 10, where the battery charging and swap station includes a plurality of charging devices, all of the charging devices are divided into a plurality of device groups, and each device group is powered by one bus bar alone,
where the charging device includes at least one of a charging pile and a battery compartment, the battery compartment is configured to charge a traction battery, and the charging pile is configured to charge a new energy vehicle, and
the power control system includes:
an obtaining module configured to obtain a total power limit of the battery charging and swap station and a requested power of each device group;
a calculation module configured to calculate a total requested power for the battery charging and swap station based on all of the requested powers;
a comparison module configured to compare the total requested power with the total power limit; and
a power allocation module configured to perform, based on a comparison result, power allocation on each device group,
where the total power limit is less than a sum of bus bar power limits of all of the bus bars.

12. The power control system for the battery charging and swap station according to claim 11, where the power allocation module is further configured to perform, based on the comparison result, power allocation on each device group in the following manner:
if the total requested power is greater than the total power limit, determining, based on the total power limit and a first preset allocation strategy, a pre-allocated power allocated to each device group from the total power limit;
determining, based on the pre-allocated power for each device group, an actual allocated power for each device group; and
performing, based on the actual allocated power for each device group, power allocation on each device group,
where the first preset allocation strategy is an equal allocation, an allocation according to a proportion of the bus bar power limit corresponding to each device group, or an allocation according to a proportion of the requested power of each device group.

13. The power control system for the battery charging and swap station according to claim 12, where the power allocation module is further configured to determine, based on the pre-allocated power for each device group, the actual allocated power for each device group in the following manner:
for each device group, taking a minimum value among the pre-allocated power, the requested power, and the bus bar power limit that are corresponding to the device group as an allocated power for the device group;
determining whether conditions that a difference between the total power limit and a sum of all allocated powers is greater than zero and there are a number of device groups with an allocated power equal to a pre-allocated power are met;
if the conditions are met, allocating the difference to the number of device groups according to a second preset allocation strategy;
updating pre-allocated powers for the number of device groups based on allocation results, and returning to re-determining the allocated power for each device group; and
if the conditions are not met, determining the actual allocated power for each device group as a current pre-allocated power,
where the second preset allocation strategy is an equal allocation, an allocation according to a proportion of the bus bar power limit corresponding to the number of device groups, or an allocation according to a proportion of the requested power of the number of device groups.

14. The power control system for the battery charging and swap station according to claim 11, 12, or 13, where the power allocation module is further configured to perform, based on the comparison result, power allocation on each device group in the following manner:
if the total requested power is less than or equal to the total power limit, determining an actual allocated power for each device group as a smaller value between the requested power corresponding to the device group and the bus bar power limit.

15. The power control system for the battery charging and swap station according to any one of claims 11 to 14, where
the obtaining module is further configured to obtain the requested power of each device group; and
the power allocation module is further configured to determine an actual allocated power for each device group as a smaller value between the requested power corresponding to the device group and the bus bar power limit,
where the total power limit is equal to the sum of bus bar power limits of all of the bus bars.
